# EUROPEAN PATENT SPECIFICATION

(11) **EP 3 727 791 B1**
(45) Date of publication and mention of the grant of the patent: **10.08.2022**
(21) Application number: 18822500.7
(22) Date of filing: 28.11.2018
(51) Int. Cl.: B29C 48/255, B29C 48/285, B29C 31/02, B29C 31/06, B65G 53/46, B65D 88/68, B65G 65/48

(54) **APPARATUS AND METHOD FOR METERING INGREDIENTS OF COMPOUNDS, IN PARTICULAR FOR TYRES**
VORRICHTUNG UND VERFAHREN ZUM DOSIEREN VON INHALTSSTOFFEN VON VERBINDUNGEN, INSBESONDERE FÜR REIFEN
APPAREIL ET PROCÉDÉ DE DOSAGE POUR DOSER DES INGRÉDIENTS DE COMPOSÉS, EN PARTICULIER POUR DES PNEUS

(30) Priority: 22.12.2017 IT 201700149069
(43) Date of publication of application: 28.10.2020
(73) Proprietor: Pirelli Tyre S.p.A., 20126 Milano (IT)
(72) Inventor: COLAMARTINO, Matteo, 20126 Milano (IT); PORTINARI, Gianni, 20126 Milano (IT); TESTI, Stefano, 20126 Milano (IT); ANFOSSI, Andrea, 20126 Milano (IT)
(74) Representative: Vittorangeli, Lucia
(86) International application number: PCT/IB2018/059396
(87) International publication number: WO 2019/123054

(56) References cited:
- EP-A1- 0 854 099
- EP-A1- 1 411 330
- EP-A2- 2 843 271
- WO-A1-2015/063473
- JP-A- 2007 001 122

## Description

The present invention relates to an apparatus for metering ingredients of compounds, in particular for tyres, preferably operated by gravity, and to a method for measuring ingredients of compounds, in particular for tyres.

The term "parallel" must be understood within the limits of tolerances, for example with a variation of +/- 20 degrees with respect to a perfectly parallel orientation. Furthermore, the term "parallel" used with reference to a straight line and to a planar surface indicates both the possibility that the straight line is at a constant distance from the planar surface and the possibility that the straight line lies on the planar surface.

The term "transverse" refers to a perpendicular or oblique arrangement between two physical or geometrical elements. The term "perpendicular" must be understood within the limits of tolerances, for example with a variation of +/- 20 degrees with respect to a perfectly perpendicular orientation.

The terms expressed in ordinal numbers such as for example "first", "second", "third" do not imply the necessity of a sequence or of a functional correlation between the elements thus indicated. Therefore, each element may be provided independently of the others, for example a third motor member may be provided also in the absence of a first motor member and/or of a second motor member.

By the expression "a surface arranged in the proximity of the outlet opening" means a surface placed at a distance from the outlet opening such as to influence the passage of the ingredient therethrough. Preferably, such a surface is located at a distance from the outlet opening, in particular along a direction transverse to the outlet opening, not greater than twice the width, preferably the diameter of the outlet opening. Even more preferably, such a surface is located at a distance from the outlet opening, in particular along a direction transverse to the outlet opening, not greater than the width, preferably the diameter, of the outlet opening.

The term "rotation solid" refers to a figure obtained by rotating a flat region around an axis, on the plane whereof the axis itself lies. A sphere is an example of a rotation solid.

With reference to the production process of a tyre, it begins with the preparation of the compounds adapted to make each component of the tyre on the basis of the specific recipe required. Each compound is prepared in a special rotor mixer, known under the trade name of "Banbury", in which the respective ingredients, for example consisting of elastomers and additives, are introduced.

The ingredients are preliminarily metered inside respective bags according to the specific recipe required. The metering takes place in plants in which an operator manually loads the bag inside a collection container which is made to translate along a loading line, stopping at one or more metering stations comprising metering augers or vibrating channels for collecting the metered ingredient in the bag.

Once filled, the bag is picked up manually by the operator who provides to seal it for transfer to the rotor mixer.

Considering the possible production variations, it is necessary to manage a large number of ingredients (for example thirty ingredients) that differ not only in the composition but also in the physical characteristics. In fact, the ingredients used in the tyre industry may be in different forms such as powders, flakes, pellets, high viscosity liquids (for example oils). Just the wide variability of the form in which the various ingredients necessary for the production of a tyre can be found has required to date the use of different metering stations (augers, vibrating channels) for different types of ingredients. Some of these metering stations have a rather high metering time, slowing down the entire system and requiring manual management with the presence of an operator for loading/unloading the bag.

The Applicant has noted that the metering systems used thus far are not able to simultaneously meet conflicting requirements such as the reduction of the overall metering times and the increase in the accuracy and quality of the metering itself. Furthermore, the Applicant has noted that known systems disperse some of the ingredients into the environment.

In addition to the foregoing, the Applicant has noted that the metering systems used thus far are not very versatile in managing variations related to the quantity of the ingredient to be metered and/or the different shapes or batches of the ingredients to be metered and/or to the environmental variations that may affect the physical characteristics of the ingredients to be metered. This poor versatility is even more significant if it is required that the metering accuracy and quality remain constant despite possible variations, or even increase. These aspects have so far required that each metering station be necessarily dedicated to a single ingredient and that in the same metering plant there were different types of metering stations depending on the ingredient to be metered, preventing a common management that contributed to reconcile the aforementioned conflicting requirements.

US4130268 discloses a rotary valve for powder and granular materials comprising a body and a valve member which, in the closed position, is arranged with a concave internal surface facing towards the flow of material and which, in the open position, is rotated so as to allow the passage of the material through an opening thereof. The convex external surface of the valve member maintains the seal with the valve body as it is not subject to wear, not being in contact with the powder material. The rotary valve described in US4130268 is used in pneumatic conveying systems of powder material.

WO2015/063473 discloses an isolation valve for powder transport systems. A rotatable closing element is shaped like a spherical shell and a pneumatic seal can be activated against the rotatable closing element.

US2004/0079767 discloses a dispensing device for a granular material comprising a rotatable cylindrical rotor provided with an inner pipe made with two elbow sections. The rotor may be replaced to adapt to different types of materials and particle sizes. A rack system rotates the rotor to dispense a certain amount of material.

Further known valves have cleaning systems dedicated to the parts most susceptible to wear, such as the outlet opening sealing ring, and/or cleaning nozzles activated outside the metering interval or scrapers (EP854099 and JP2007001122).

The Applicant has perceived that the accuracy and the quality with which the metering of the ingredients is carried out represent parameters capable of affecting the quality of the mixtures and therefore of the final product, in particular of the vulcanised tyre. The Applicant has verified that the systems described in US4130268 and WO2015/063473 are implemented to optimise the transport, for example pneumatic, of the materials and therefore do not deal with problems related to the reliability of the metering. The Applicant has also perceived that the accuracy and the quality of the metering may represent an aspect of criticality as it is possible that any problems in the metering step, i.e. in the first production step, for example of a tyre, emerge only at the end of the production process, for example following checks carried out on the vulcanised tyre.

In the Applicant's perception, by intervening in the area of the outlet opening to prevent packing the material it is possible to combine the aforementioned conflicting requirements of reducing the metering times also and above all for high quantities, increase the accuracy of the metering and obtain the required quality, avoiding any contamination.

The Applicant has therefore found that by introducing a scraper device arranged in the proximity of the outlet opening and provided with a movable scraping surface, preferably rotating around a rotation axis, for example transverse to said outlet opening, it is possible to obtain accuracy of the order of 1% also for weights of collected material of the order of some tens of kg, reduce the metering time up to a time of the order of 30", thus being compatible with an automatic management of the bags, reduce the dispersions in the environment and increase the quality of the metered ingredient, avoiding possible contaminations and allowing the management of any type of ingredients, also viscous and/or in the form of mixtures already prepared, for example mixtures consisting of powders and/or grains dispersed in an oily matrix.

More precisely, according to a first aspect, the present invention relates to a metering apparatus for metering ingredients of compounds, in particular for tyres, preferably operated by gravity according to claim 1.

The Applicant believes that the selection of the preferably spherical convex shape of the shutter body and the presence of a scraper device allow metering efficiently, quickly and with very high accuracy any type of ingredient for compounds, in particular of tyres, irrespective of the form in which it occurs (dust, scales, drops, tablets, pellets, oils...) and of the environmental conditions.

The geometry of the shutter body allows effective cleaning, which can also be activated during the metering and can be automated due to the fact that the shutter body rotates in the same space as the outlet opening and because a movable scraper device is used which can be activated on the area occupied by the shutter body itself.

Said scraper device may be activated both during metering, in continuous or pulsed mode, and during the interval between two or more consecutive metering operations or during periodic maintenance without having to disassemble the valve, thus simplifying the maintenance thereof and limiting the machine downtime.

The mode and the frequency of activation of the scraper device may depend among other things on the viscosity of the material and/or mixture to be metered.

Moreover, the aforesaid metering apparatus allows reducing the filling time and the dispersion of the ingredient into the environment and is therefore suitable for use in an automated system.

Finally, the Applicant believes that a universal metering apparatus is provided, adaptable to any type of ingredient (powders, granular or viscous materials) and to possible mixtures of ingredients even of different types, making the control of the parameters influencing the accuracy and the metering time more effective.

According to a second aspect thereof, the present invention relates to a method for metering ingredients of compounds, in particular for tyres according to claim 12.

The Applicant believes that this scraping action provides a universal method adaptable to any type of ingredient (powders, granular or viscous materials) and to possible mixtures of ingredients even of different types, making the control of the parameters influencing the accuracy and the metering time more effective.

In one or more of the above aspects, the present invention may comprise one or more of the following features.

Preferably, said outlet opening has a circular shape.

Preferably, the shutter body has a spherical shutter surface. Preferably, said scraping surface is rotatable around a rotation axis preferably transverse to said outlet opening.

Preferably, said scraping surface is placed in rotation around a rotation axis.

Preferably, said at least one scraping surface is counter-shaped with respect to a scraper ring delimiting the outlet or passage opening and/or internal surfaces of the storage container arranged in the proximity of said outlet opening.

Preferably, a plurality of scraping surfaces preferably distributed around a rotation axis is provided. Even more preferably, at least four scraping surfaces are provided, even more preferably at least six scraping surfaces distributed around the rotation axis. Preferably, the number of scraping surfaces is such as to cover a total surface comprised between 5% and 30% (four tabs), preferably 15% and 45% (six tabs) of the preferably spherical shutter surface.

The Applicant believes that this aspect provides a universal metering apparatus, adaptable to any type of ingredient (powders, granular or viscous materials) and to possible mixtures of ingredients even of different types, making the control of the parameters influencing the accuracy and the metering time more effective.

Preferably, said at least one scraping surface has a plurality of scraping portions. Even more preferably, at least one scraping portion is configured to be placed in motion, preferably in rotation independently of the remaining scraping portions. Preferably, said scraping surface, and in particular a first scraping portion of the scraping surface, is counter-shaped with respect to said preferably spherical shutter surface and is activatable on at least a portion of a preferably spherical cap defined by said preferably spherical shutter surface when arranged in the angular closing position.

Preferably, said first scraping portion is implemented by a surface of a tab preferably rotatable around a rotation axis integral with a hub, preferably polygonal.

Preferably, said at least one scraping surface has a second scraping portion counter-shaped with respect to a scraper ring delimiting the outlet or passage opening and activatable thereon. Preferably, said second scraping portion is implemented by a surface of a tab preferably rotatable around a rotation axis integral with a hub preferably polygonal.

Preferably, said at least one scraping surface has a third scraping portion counter-shaped with respect to internal surfaces of the storage container arranged in the proximity of said outlet or passage opening and activatable thereon. Even more preferably, said third scraping portion is implemented by a surface of a tab preferably rotatable around a rotation axis integral with a hub, preferably polygonal.

Preferably, said tab has a thickness of about 3-8 mm.

Preferably, a third motor member is operatively connected to said scraper device to cause rotation of said scraping surface at a scraping speed about a rotation axis. Preferably, said third motor member is operated at a speed of between 5 and 40 rpm. Even more preferably, for example in the case of at least six scraping surfaces, said third motor member is operated at a speed of between 5 and 20 rpm.

Preferably, said scraper device comprises a single tab for providing the entire scraping surface. Said single tab is preferably rotatable around a rotation axis integrally to a hub, preferably polygonal. Alternatively, said scraper device comprises two or more complementary tabs cooperating with each other to provide said scraping surface. Said complementary tabs are preferably rotatable around a rotation axis integrally to a hub, preferably polygonal. Preferably, said complementary tabs are connected to a single hub in the same angular position with respect to the rotation axis. Alternatively, said complementary tabs are connected to different hubs and are preferably rotatable around the rotation axis independently of each other.

The scraping as described above has proved to be particularly advantageous in the case of powdery and highly packaging materials which tend to adhere to the inner walls of the storage container, around the outlet or passage opening. Such a packing is therefore prevented by scraping both the shutter body and the parts around it and/or by using tabs and therefore low-thickness scrapers. In this way, the material flows constantly and does not pack. In addition, the scraper device speeds up the final or end metering step, accompanying the material towards the outlet opening.

Preferably, a control unit is operatively connected to the scraper device and is configured for generating a second control signal addressed to the scraper device and adapted to control the operating parameters thereof, such as a scraping speed (intended as activation starting from a null scraping speed of the scraper device and/or scraping speed module and/or direction of the scraping speed), as a function of the opening degree of the outlet or passage opening and/or as a function of the quantity of ingredient collected in the collection station. Preferably, said control unit is operatively connected to the third motor member to control the scraping speed.

The Applicant believes that the control of the aforementioned operating parameters of the scraper device, in particular of the scraping speed as a function of the opening degree of the outlet or passage opening and/or of the quantity of ingredient collected allows optimising the cleaning degree by adapting it to the type of ingredient and the metering step, so as to define a further factor suitable for influencing quality and accuracy. Furthermore, the aforesaid control is such as to influence the accompaniment of the material towards the outlet opening to speed up the final or end metering step.

Preferably, a collection station of the ingredient arranged at the outlet opening and comprises a measuring device configured for generating a measurement signal indicative of the quantity of collected ingredient.

Preferably, a first motor member is operatively connected to said shutter body in order to cause the rotation thereof around the shutter axis between an angular closing position in which said shutter surface is arranged to completely close the outlet opening and an angular open position in which said outlet opening is at least partially open at an open surface.

Preferably, said control unit is operatively connected at least to the measuring device and to the first motor member and configured for receiving said at least one measurement signal and for generating, as a function of the quantity of ingredient collected in the collection station, a first control signal directed to the first motor member and adapted for controlling the degree of opening of the outlet opening.

Preferably, said shutter body is shaped as a portion of a rotation solid, preferably a ball having a centre arranged on said shutter axis. Preferably, said shutter axis is offset with respect to the outlet opening. Preferably, said portion of a rotation solid, preferably a ball, is delimited by said shutter surface and by a passage surface which cuts said rotation solid, preferably said ball, at a single edge delimiting the shutter surface and the passage surface. Preferably, in the angular opening position said outlet opening is at least partially open on said passage surface. The Applicant believes that the provision of a portion of a rotation solid, preferably a ball, as a shutter body allows meeting the required high parameters of cleaning and ease of flow of the ingredient exiting from the storage container.

Preferably, the passage surface comprises a first portion defining a first plane parallel to the shutter axis.

Preferably, the passage surface comprises a second portion defining a second plane parallel to the shutter axis. Preferably, the second portion intersects the first portion.

Preferably, said portion of a rotation solid, preferably a ball, comprises said shutter axis.

The Applicant believes that this configuration allows implementing a passage surface defining an outlet chute to facilitate the flow of the ingredient.

Preferably, said shutter body is configured for performing a total angular movement of 120° from the angular closing position to an angular end-of-travel position.

Preferably, the first portion is arranged at a distance from the shutter axis equal to about ¾ of the radius of the rotation solid, preferably of the ball.

Preferably, the first portion is shaped so as to generate, at least in angular positions of the shutter body close to the angular closing position, a circular segment configuration of said open surface of the outlet opening.

The Applicant believes that providing a shutter body having a conformation according to a portion of a rotation solid, preferably a ball, with a passage surface having a first planar portion arranged in such a position allows regulating the outlet of the ingredient by splitting the outlet opening with different geometries according to the quantity (weight) of ingredient collected in the collection station, in particular according to circular segments.

Preferably, said first portion has a recess adapted to form, in at least a position of partial angular opening of the shutter body, an effective portion of the open surface which has a width parallel to the shutter axis, having a value comparable to that of a length, perpendicular to the shutter axis.

Preferably, the first portion is shaped so as to generate, at least in angular positions of the shutter body close to the angular closing position, an open surface of the outlet opening having at least one elongated portion in the direction of the shutter axis preferably shaped according to a circular segment portion. Preferably, said recess is implemented by a groove, preferably formed centrally in the first portion, which develops in a direction perpendicular to the projection of the shutter axis on the first portion, an apex of the groove defining a closing point of the shutter body which, when lying on the plane of the outlet or passage opening, or below it, corresponds to the angular closing position of the shutter body.

Preferably, the shape and dimensions of the groove are a function of the type of ingredients, in particular the shape and size of at least one ingredient in tablets.

The Applicant believes that this aspect widens the field of application of the metering apparatus, simplifying the outlet of the ingredient irrespective of the type thereof and making the same metering apparatus usable for any type of ingredient. Moreover, such a provision allows managing the decrease in the open surface more gradually and in a linear manner, particularly in the last metering step which affects the final accuracy. Preferably, the second portion is arranged at a distance from the shutter axis equal to about ¼ of the radius "R" of the rotation solid, preferably of the ball. Preferably, the passage surface comprises a third portion defining a third planar surface parallel to the shutter axis and preferably arranged at a distance from the shutter axis equal to about ¼ of the radius of the rotation solid, preferably of the ball. The third planar surface intersects the second portion.

The Applicant believes that a second and possibly a third portion of the passage surface can shape the passage surface so as to limit the metering times.

Preferably, a stirrer is arranged in said storage container, preferably rotating around a transverse rotation axis, preferably perpendicular, to said outlet opening. Preferably, a second motor member is operatively connected to said stirrer to cause the rotation thereof around said rotation axis.

Preferably, said control unit is operatively connected to the second motor member and is configured for generating a second control signal addressed to the second motor member and adapted to control a rotation speed of the stirrer according to the opening degree of the outlet opening.

Preferably, said control unit is operatively connected to the second motor member and is configured for generating a second control signal addressed to the second motor member and adapted to control a rotation speed of the stirrer according to the quantity of ingredient collected in the collection station.

The Applicant believes that the stirrer control as a function of the degree of opening of the outlet opening and/or the quantity of ingredient collected allows optimising the flow of the ingredient, adapting it to the metering step so as to define a further factor suitable for influencing the quality and accuracy.

Said stirrer preferably comprises a central shaft defining the rotation axis and at least one blade extending radially from one end of the central shaft and comprises said scraping surface whereby said stirrer integrates said scraper device.

Said stirrer preferably comprises two or more blades uniformly distributed around the central shaft and active on the preferably spherical shutter surface.

Said stirrer preferably comprises four blades uniformly distributed around the central shaft and active on the preferably spherical shutter surface.

Preferably, the blade extends from the central shaft, even more preferably from one of the lower ends thereof, and has an arcuate conformation adapted to superiorly enclose a portion of the preferably spherical shutter surface.

Preferably, the extension of the blade is such as to cover a section comprised between the central shaft and the outlet opening.

Preferably, the distance between the scraping surface and the preferably spherical shutter surface is less than 5 mm.

Preferably, said blades are oriented radially with respect to said rotation axis. Alternatively, said blades have an inclined orientation with respect to a radial direction to said rotation axis to influence the fall of the ingredient away from the outlet opening or being pushed towards the outlet opening.

In other words, preferably the blade follows the profile of the preferably spherical shutter surface for the whole section between the central shaft and the outlet opening, partially travelling over a meridian of the portion of rotation solid (ball) which defines the shutter body or following in a curved manner the portion of rotation solid (ball).

Said stirrer preferably comprises at least one mixing paddle, preferably above the blade, having an inclined orientation with respect to said rotation axis to influence the fall of the ingredient away from the outlet opening or being pushed towards the outlet opening.

Said control unit is preferably configured for controlling the rotation direction of a stirring speed of the stirrer as a function of the degree of opening of the outlet opening in order to influence the fall of the ingredient away from the outlet opening or being pushed towards the outlet opening. Preferably, the rotation direction of a stirring speed of the stirrer is controlled as a function of the degree of opening of the outlet opening in order to influence the fall of the ingredient away from the outlet opening or being pushed towards the outlet opening.

Preferably, the mixing paddle is arranged at a certain distance from the blade along the rotation axis. Preferably, two or more mixing paddles are provided.

The Applicant believes that this aspect improves the distribution of the ingredient in the storage container and contributes to managing the flow of the ingredient both as a function of the type of ingredient and as a function of the metering step. Preferably, said mixing paddle is connected to the central shaft so as to rotate integral with said blade.

Said stirrer preferably comprises at least one mixing arm which extends radially from the rotation axis and is arranged in an intermediate position along the rotation axis itself.

Preferably, said mixing arm is connected to the central shaft so as to rotate integrally with said blade.

Preferably, two or more mixing arms are provided arranged staggered along and/or around the rotation axis.

The Applicant believes that this aspect improves the distribution of the ingredient in the storage container and helps preventing stagnations that would negatively affect accuracy.

Preferably, supporting spokes arranged transversely to the rotation axis are provided inside the storage container to support the central shaft.

Preferably, said first motor member is reversible.

Preferably, said metering apparatus comprises a safety device configured for causing the automatic closing of the outlet opening bringing the shutter body back to an angular closing position.

The outlet opening is automatically closed in case of fault. Preferably, the safety device comprises an elastic element operatively active on the shutter member to bring it back to the angular closing position. Preferably, the elastic element in the form of a helical spring is interposed between the shutter shaft and a frame of the metering apparatus preferably by means of a lever.

The Applicant believes that this aspect improves safety and avoids dispersion of the ingredient.

Preferably, the control unit is configured for calculating the maximum angular opening position of the shutter body as a function of the final quantity (weight) of the ingredient to be collected in the collection station and at least one value of approach to the final quantity.

Preferably, the maximum angular opening position of the shutter body is calculated as a function of the final quantity (weight) of the ingredient to be collected in the collection station and at least one value of approach to the final quantity.

The Applicant believes that this aspect allows adapting the manner in which the outlet opening is opened to the quantity of ingredient to be metered.

Preferably, the control unit is configured for generating an opening signal addressed to the first motor member adapted to cause rotation of said shutter body from the angular closing position to the maximum angular opening position.

Preferably, controlling the degree of opening of the outlet opening comprises causing the rotation of said shutter body from the angular closing position to the maximum angular opening position.

Preferably, the collection station comprises sensors operatively connected to the control unit and configured for generating a signal for the presence of a collection container in the collection station and/or below the outlet opening. Preferably, the control unit is configured for subordinating the opening signal upon reception of the presence signal of a collection container.

Preferably, the opening of the outlet opening is enabled if the presence of a collection container is detected in the collection station and/or below the outlet opening.

Preferably, controlling the degree of opening of the outlet opening comprises decreasing the degree of opening of the outlet opening causing rotation of the shutter body from the maximum angular opening position towards the angular closing position upon reaching a first value of approach to the final quantity.

Preferably, the first control signal is adapted to decrease the degree of opening of the outlet opening causing rotation of the shutter body from the maximum angular opening position towards the angular closing position upon reaching a first value of approach to the final quantity. Preferably, said measuring device is configured for generating a measurement signal indicative of the attainment of at least a first value of approach to the final quantity.

Preferably, the modes of controlling the degree of opening of the outlet opening are modified when at least one further value of approach to the final quantity is reached.

Preferably, the first control signal is suitable for modifying the modes for controlling the degree of opening of the outlet opening when at least one further value of approach to the final quantity is reached.

Preferably, said measuring device is configured for generating a measurement signal indicative of the attainment of at least a further value of approach to the final quantity.

The Applicant believes that by adjusting the degree of opening of the outlet opening on the basis of the achievement of values of approach to the final quantity, it is possible to gradually optimise the metering accuracy and reduce the metering time.

Preferably, when the measurement signal indicates the achievement of the first value of approach to the final quantity, the first control signal controls the closing of the shutter body at a given angular speed and/or for reaching a first intermediate angular position. Preferably, when the measurement signal indicates the achievement of a second approach value, closer to the final quantity, the first control signal controls the closing of the shutter body by modifying the angular speed thereof and/or setting a second intermediate angular position.

Preferably, when the measurement signal indicates the achievement of a third approach value, closer to the final quantity, the first control signal controls the closing of the shutter body by modifying the angular speed thereof and/or setting a third intermediate angular position.

Preferably, when the measurement signal indicates the achievement of the final quantity (overall weight), the first control signal controls the closing of the shutter body for reaching the angular closing position.

Preferably, the preferably spherical shutter surface facing towards an internal volume of the storage container and/or a scraper ring delimiting the outlet opening and/or internal surfaces of the storage container arranged in the proximity of said outlet opening is scraped, causing movement preferably the rotation of the at least one counter-shaped scraping surface with respect to said preferably spherical shutter surface and/or said scraper ring and/or said internal surfaces of the storage container preferably around the rotation axis. Preferably, said scraping surface is active on at least a portion of a preferably spherical cap defined by said preferably spherical shutter surface when arranged in an angular closing position and/or on said scraper ring and/or on said internal surfaces of the storage container.

Preferably, said scraping surface has a plurality of scraping portions. Even more preferably, at least one scraping portion is placed in motion, preferably in rotation, independently of the remaining scraping portions.

Preferably, a surface of the metering apparatus arranged in the proximity of the outlet opening is scraped, causing the rotation of a plurality of scraping surfaces distributed around the rotation axis.

Preferably, the quantity of the ingredient collected in the collection station is measured.

Preferably, the degree of opening of the outlet opening is controlled as a function of the quantity of ingredient collected in the collection station.

Preferably, a scraping speed corresponding to the rotation speed of the scraping surface is controlled as a function of the quantity of ingredient collected in the collection station and/or as a function of the degree of opening of the outlet opening. Preferably, a stirring speed of the ingredient corresponding to a rotation speed of a stirrer arranged in said storage container is controlled as a function of the quantity of ingredient collected in the collection station and/or as a function of the degree of opening of the outlet opening.

Preferably, controlling said scraping and/or stirring speed comprises calculating, as a function of a final quantity of ingredient to be collected in the collection station, the maximum scraping speed and/or the maximum stirring speed and at least one value of approach to the final quantity and set said maximum scraping speed and/or said maximum stirring speed. Preferably, the control unit is configured for calculating, as a function of a final quantity of ingredient to be collected in the collection station, the maximum scraping speed and/or the maximum stirring speed and at least one value of approach to the final quantity. Preferably, the control unit is configured for generating an activation signal addressed to the second motor member adapted to cause the rotation of said stirrer at said maximum stirring speed.

Preferably, the activation signal is generated simultaneously with the opening signal.

The Applicant believes that this aspect allows adapting the maximum scraping speed to the quantity of ingredient to be metered.

Preferably, controlling the scraping speed and/or the stirring speed comprises decreasing the scraping speed and/or the stirring speed from said maximum scraping speed and/or said maximum stirring speed upon reaching a first value of approach to the final quantity.

Preferably, the second control signal is adapted to decrease the scraping and/or the stirring speed from said maximum speed upon reaching a first value of approach to the final quantity. Preferably, the modes of controlling the scraping speed and/or the stirring speed are modified when at least one further value of approach to the final quantity is reached.

Preferably, the second control signal is suitable for modifying the modes for controlling the scraping speed and/or the stirring speed when at least one further value of approach to the final quantity is reached.

Preferably, when the measurement signal indicates the achievement of a first value of approach to the final quantity, the second control signal decreases the scraping speed and/or the stirring speed starting from the maximum scraping and/or stirring speed and sets a first scraping and/or stirring speed lower than the maximum scraping and/or stirring speed. Preferably, when the measurement signal indicates the achievement of a second value of approach to the final quantity, closer to the final quantity, the second control signal modifies, preferably decreases, the scraping and/or stirring speed and sets a second, different scraping and/or stirring speed, preferably lower than the first scraping and/or stirring speed.

Preferably, when the measurement signal indicates the achievement of a third value of approach to the final quantity, closer to the final quantity, the second control signal modifies, preferably decreases the scraping and/or stirring speed and sets a third, different scraping and/or stirring speed, preferably lower than the second scraping and/or stirring speed.

Preferably, the third scraping and/or stirring speed is such as to obtain the correct exit of the last part of the ingredient, in whatever form it is in order to obtain the desired degree of accuracy.

Preferably, when the measurement signal indicates the achievement of the final quantity (overall weight), the second control signal sets a null scraping and/or stirring speed.

The Applicant believes that by adjusting the scraping speed, in particular the rotation speed of the stirrer on the basis of values of approach to the final quantity, it is possible to gradually optimise the metering accuracy and reduce the metering time. Preferably, the rotation direction of said stirring speed and/or said scraping speed is controlled as a function of the degree of opening of the outlet opening in order to influence the fall of the ingredient away from the outlet opening or being pushed towards the outlet opening.

Said control unit is preferably configured for controlling the rotation direction of the stirring and/or scraping speed as a function of the degree of opening of the outlet opening in order to influence the fall of the ingredient away from the outlet opening or being pushed towards the outlet opening.

Preferably, said bottom comprises a scraper ring mounted inside the storage container and delimiting the outlet opening. Preferably, the scraper ring may be associated with a support ring.

Preferably, the storage container develops mainly along a vertically arranged longitudinal axis.

Preferably, the storage container is made of bent plates coupled together by one or more coupling flanges. Preferably, the storage container is divided into portions along the longitudinal axis, for example an upper portion having the inlet opening, an intermediate portion and a lower portion having the bottom. Preferably, the first motor member is directly keyed onto a shutter shaft defining the shutter axis and carrying the shutter body.

Preferably, the second motor member is directly keyed on the central shaft. Preferably, the central shaft passes through an upper section of the storage container and has an upper end directly keyed to the second motor member.

Preferably, the metering apparatus is mounted on a frame made so as to arrange the outlet opening at a given height with respect to a support plane of the frame itself.

Further features and advantages will appear more clearly from the detailed description of a preferred but non-exclusive embodiment of a metering apparatus for metering ingredients of compounds, in particular for tyres, and a method for metering ingredients of compounds, in particular for tyres according to the present invention, together with a metering valve and a metering plant.

Such description is given hereinafter with reference to the accompanying drawings, provided only for illustrative and, therefore, non-limiting purposes, in which:
- figure 1 is a schematic lateral view of a metering plant;
- figures 1A and 1B are schematic views of a detail of the plant in figure 1 according to possible embodiments;
- figure 2 is a schematic perspective view of a metering apparatus of ingredients of compounds, in particular for tyres;
- figure 3 is a schematic front view of the metering apparatus in figure 2 in which some elements have been omitted to highlight others;
- figure 4 is sectional view of the metering apparatus in figure 3 according to line IV-IV;
- figures 4A-4E show the detail "X" in figure 4 enlarged and in different operating configurations;

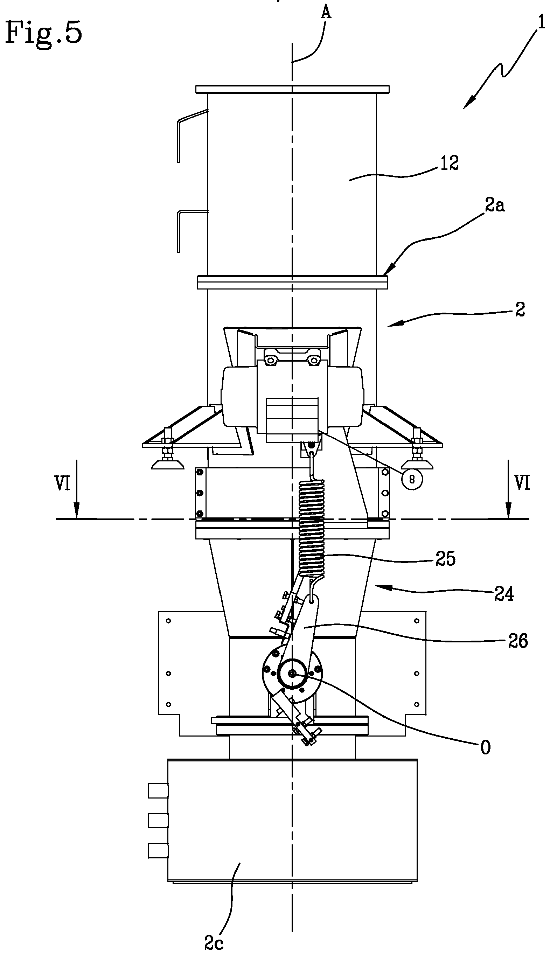

- figure 5 is a lateral view of the metering apparatus in figure 3;

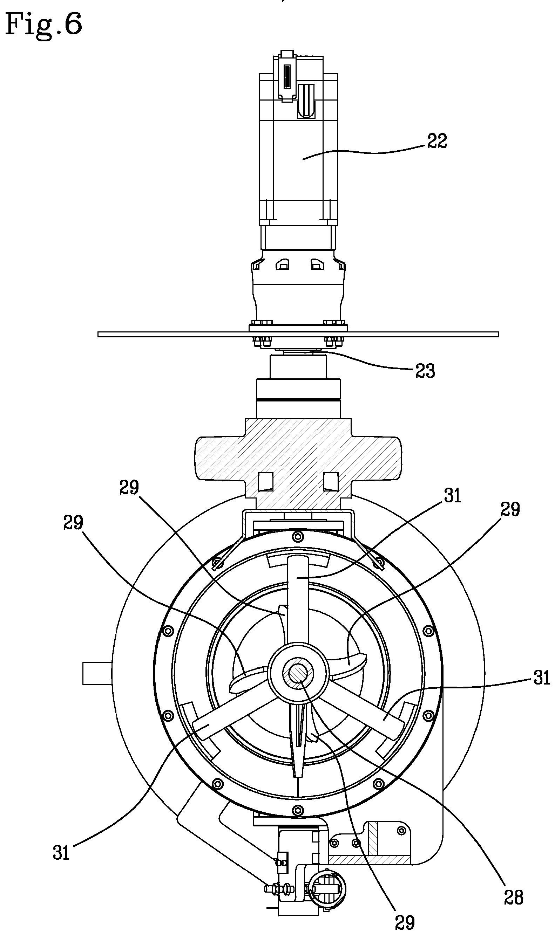

- figure 6 is sectional view of the metering apparatus in figure 5 according to line VI-VI;
- figure 7 is a schematic perspective view of a component of the metering apparatus in figure 3;
- figure 8 is a front view of the component in figure 7;
- figure 9 is a top view of the component in figure 7;
- figure 10 is a sectional view of the component in figure 9 according to line X-X;
- figure 11 is a sectional view of the component in figure 8 according to line XI-XI;
- figure 12 is a schematic perspective view of a further component of the metering apparatus in figure 3;
- figure 12A is a schematic perspective view of an additional element of the further component in figure 12;
- figure 13A is a sectional view of the further component in figure 12 according to line XIII-XIII;
- figure 14A is a sectional view of the further component in figure 13 according to line XIV-XIV;

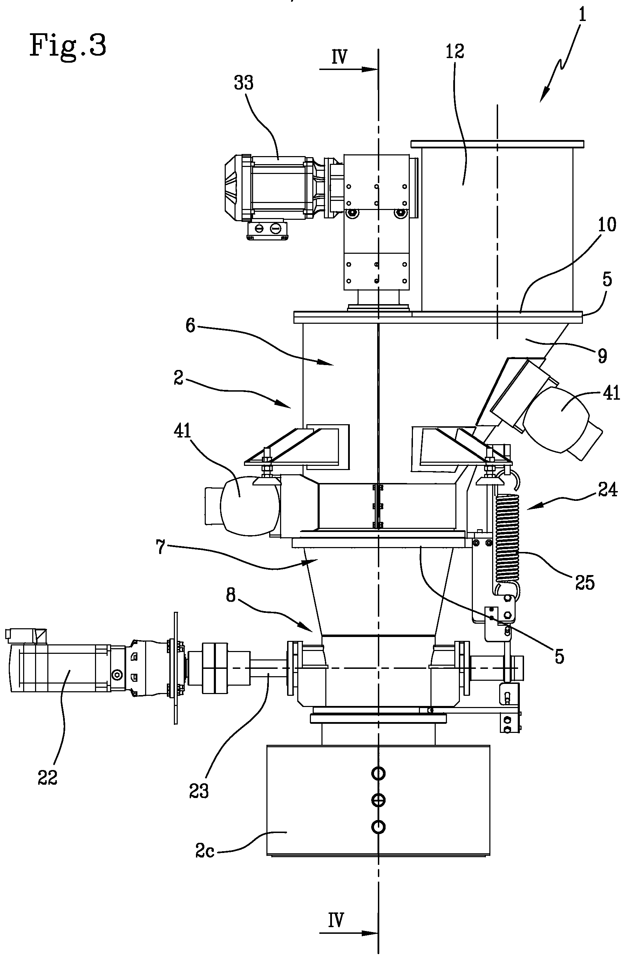

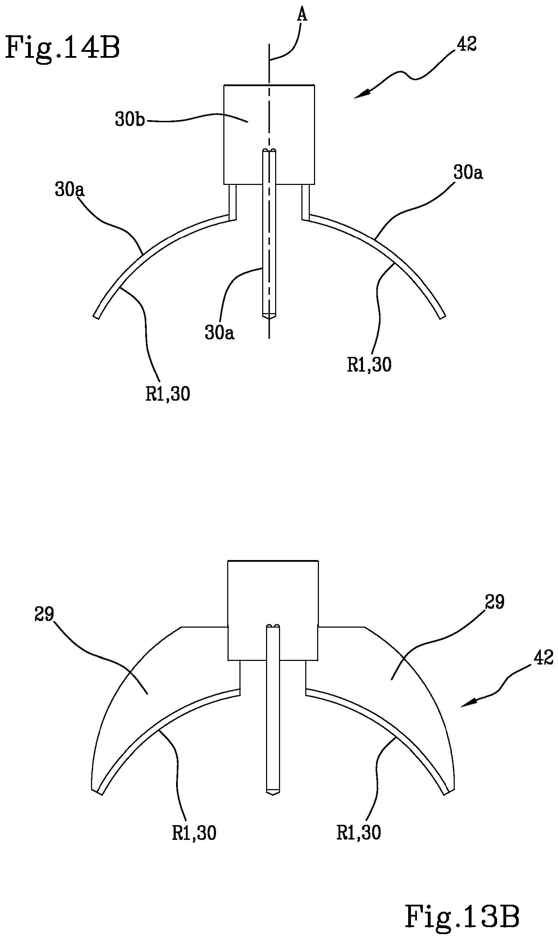

- figure 13B is a side view of a component of the metering apparatus in figure 3 according to a possible embodiment;

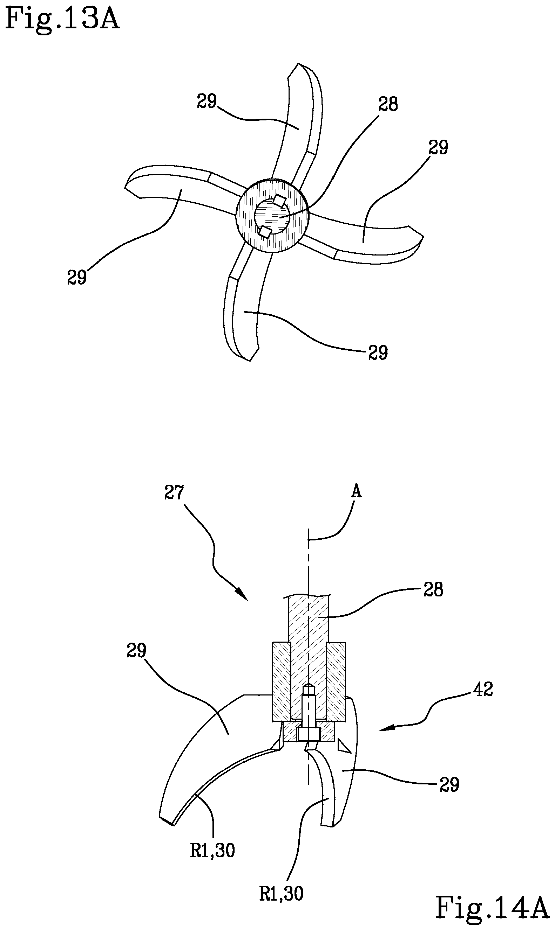

- figure 14B is a side view of a component of the metering apparatus in figure 3 according to a possible embodiment;

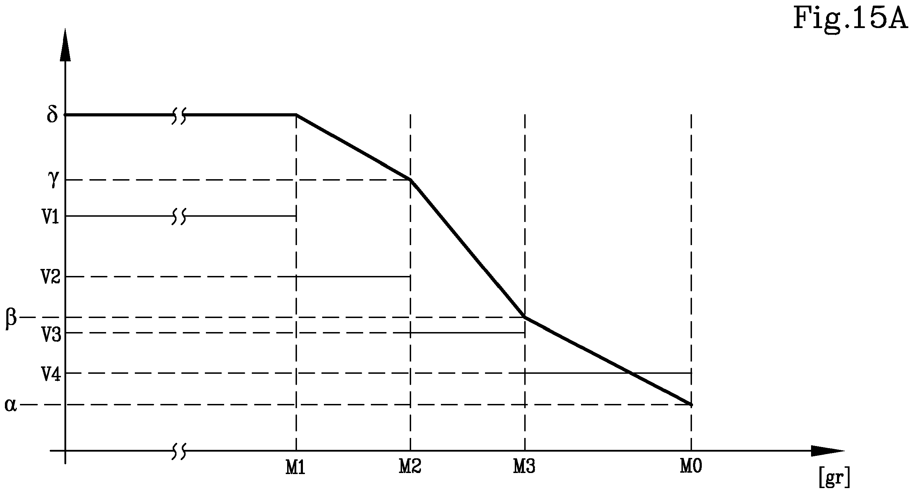

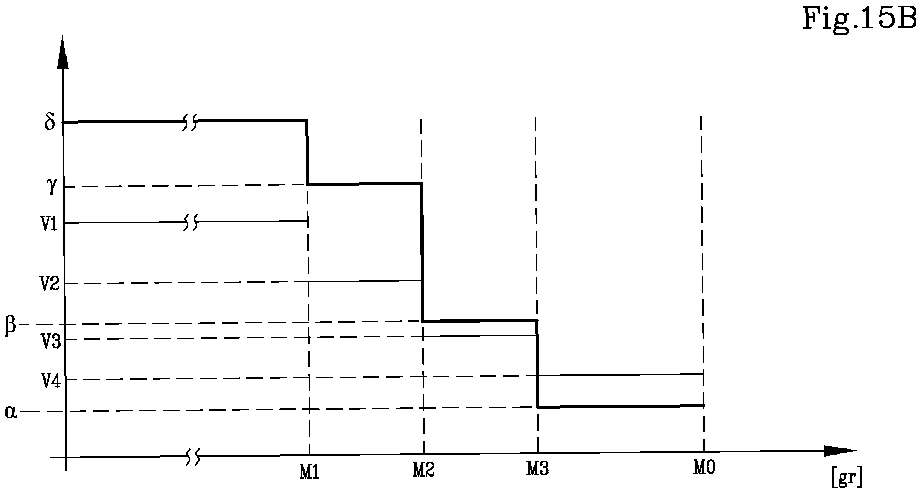

- figure 15A and figure 15B show a diagram relative to the operation of the metering apparatus, respectively;

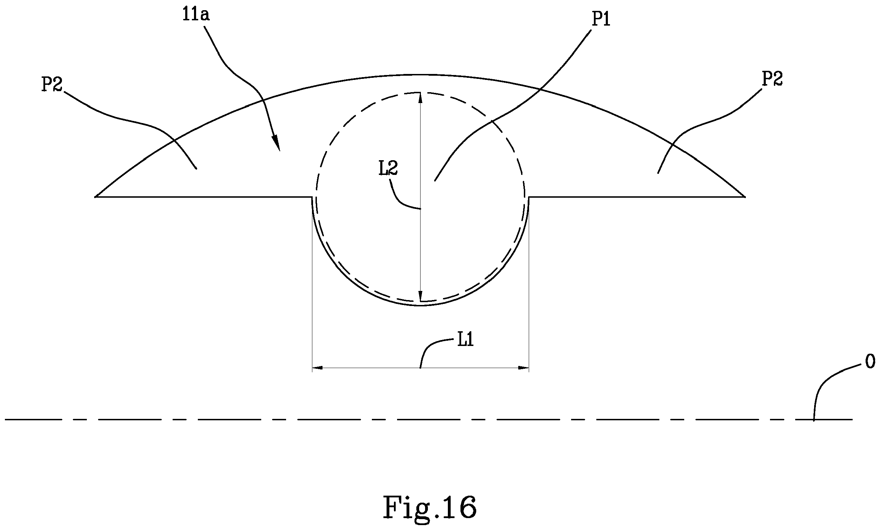

- figure 16 schematically shows an opening surface of the metering apparatus through which an ingredient to be dispensed flows;

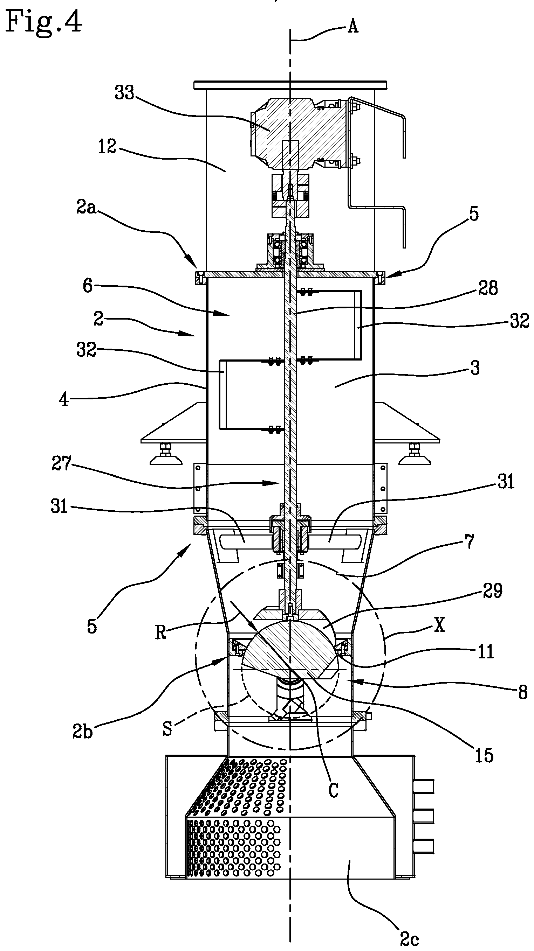

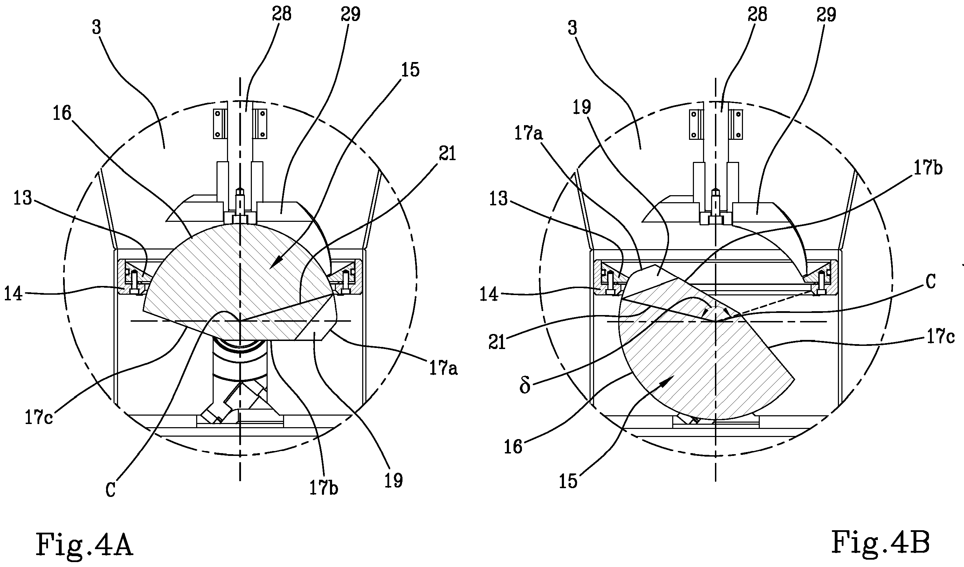

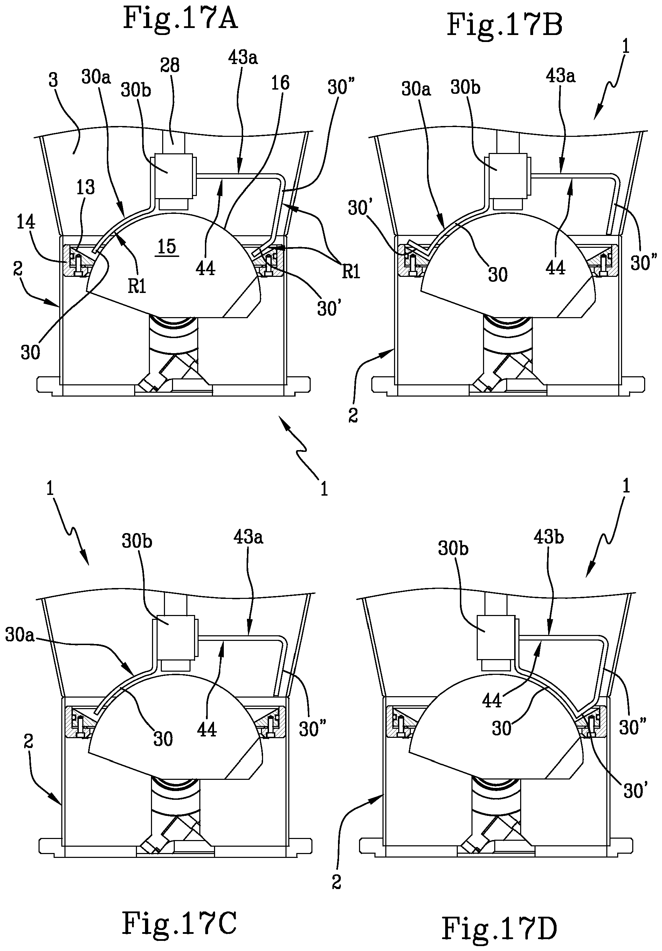

- figures 17A-17D show possible variants of the detail "X" in figure 4A enlarged.

With reference to the accompanying figures, reference numeral 1 indicates a metering apparatus for metering ingredients of compounds, in particular for tyres.

The metering apparatus comprises a storage container 2 delimiting an internal volume 3 adapted to receive an ingredient of compounds, in particular for tyres. The storage container 2 develops mainly along a longitudinal axis "A" arranged vertically and has an upper section 2a and a bottom 2b. Preferably, the storage container 2 is made of bent plates 4 coupled together by one or more coupling flanges 5. Preferably, the storage container 2 is divided into portions along the longitudinal axis "A", for example an upper portion 6, an intermediate portion 7 and a lower portion 8.

The upper portion 6 comprises the upper section 2a and has a cylindrical shape provided with an enlargement which defines a feeding chute 9 of the storage container 2. The intermediate portion 7 has a frusto-conical shape with a downward decreasing cross-section along the longitudinal axis "A". The lower portion 8 has a cylindrical shape and comprises the bottom 2b.

The storage container 2 has an inlet opening 10 and an outlet opening 11.

The inlet opening 10 is located at the upper section 2a and is for example implemented by an access conduit 12 to the internal volume 3. According to the illustrated example, the inlet opening 10 is arranged laterally with respect to the longitudinal axis "A" at the enlargement of the upper portion 6 so as to face on the feeding chute 9.

Optionally, it is possible to extend the internal volume 3 by connecting an additional storage container to the access conduit 12.

The outlet opening 11 is arranged in the bottom 2b of the storage container 2 and has a circular shape in a substantially horizontal plane. The outlet opening 11 has a diameter preferably comprised between 200 mm and 300 mm.

The bottom 2b is preferably mounted inside the lower portion 8. For example, the bottom 2b comprises a scraper ring 13 mounted inside the lower portion 8 and delimiting the outlet opening 11. The scraper ring 13 may be associated with a support ring 14.

A shutter body 15 is housed in the outlet opening 11 and is rotated about a shutter axis "O" parallel to the plane defined by the outlet opening 11 so that the outlet opening 11 is closed or opened as a function of the angular position of the angular body 15. The shutter axis "O" is preferably offset with respect to the outlet opening 11.

The degree of opening of the outlet opening 11 is defined by the area of an open surface 11a of the outlet opening 11, through which the ingredient flows, which is variable as a function of the angular position of the shutter body 15.

The shutter body 15 housed in the outlet opening 11 provides a metering valve which can be used inside the metering apparatus 1 or in different devices. In the case of the metering apparatus 1, the lower portion 8 of the storage container 2 performs the functions of housing the metering valve and the outlet opening 11 performs the functions of passage opening of the metering valve.

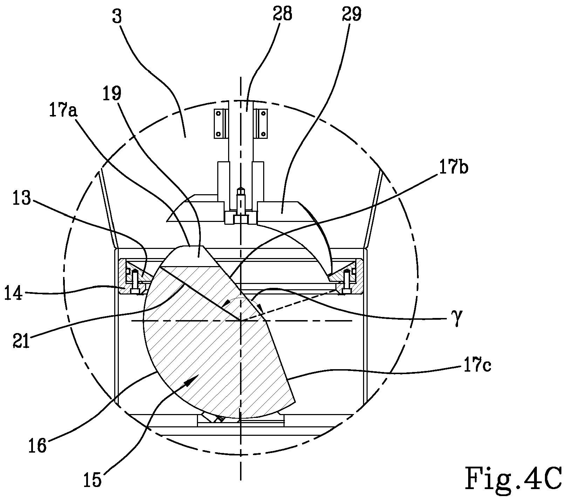

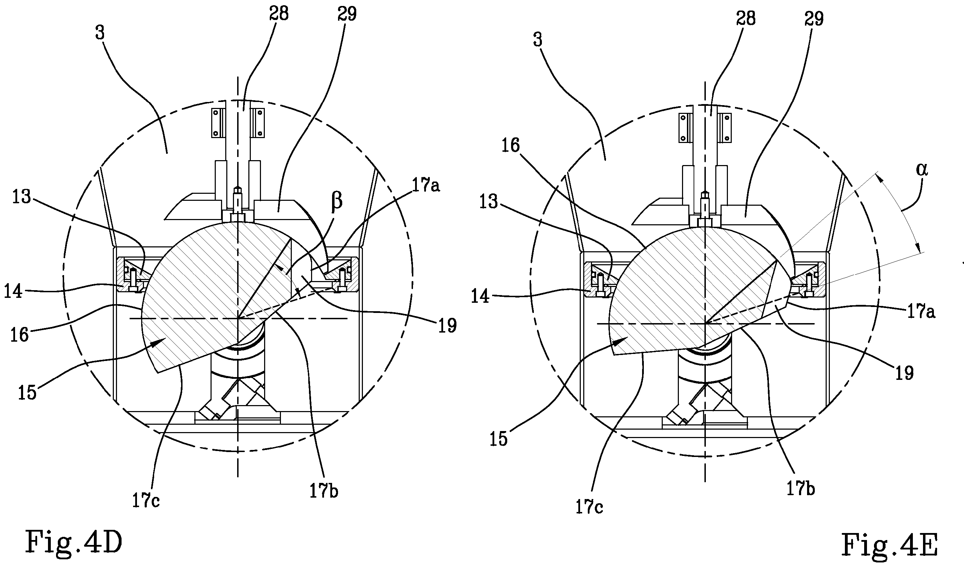

The shutter body 15 is shaped as a portion of a ball "S" (indicated by a dashed line in figure 4) having centre "C" arranged on the shutter axis "O" and radius "R" preferably comprised between 105 mm and 160 mm.

The portion of ball which defines the shutter body 15 is delimited on one side by a spherical shutter surface 16 which coincides with the external surface of the ball and on the other side by a passage surface 17 which cuts the ball at a single edge 18 delimiting the spherical shutter surface 16 and the passage surface 17.

A front portion 18a of the edge 18 defines a closing zone of the shutter body 15 which, when lying on the plane of the outlet opening 11 or below it, corresponds to the angular closing position of the shutter body.

The portion of ball defining the shutter body 15 comprises the shutter axis "O". In other words, the shutter axis "O" crosses the portion of ball defining the shutter body 15 between the spherical shutter surface 16 and the passage surface 17.

The spherical shutter surface 16 has a convex profile facing the internal volume 3 and therefore towards the ingredient to be metered.

In an angular closing position of the shutter body 15, the spherical shutter surface 16 is arranged to completely close the outlet opening 11. In this angular closing position, the spherical shutter surface 16 defines a spherical cap within which the shutter body 15 moves, assuming, for example, a maximum angular opening position and one or more partial angular opening positions. At least in the maximum angular opening position, the spherical shutter surface 16 can be arranged outside the spherical cap.

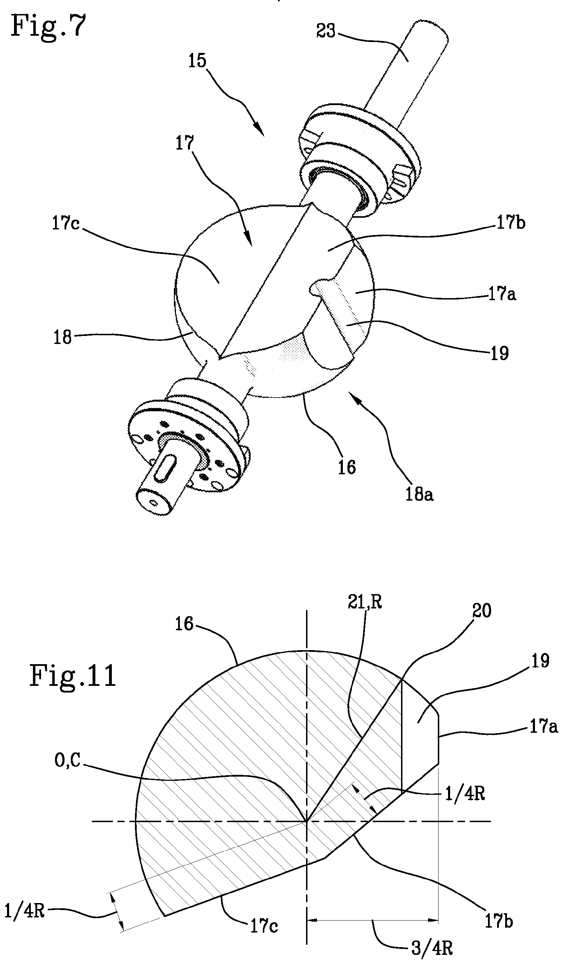

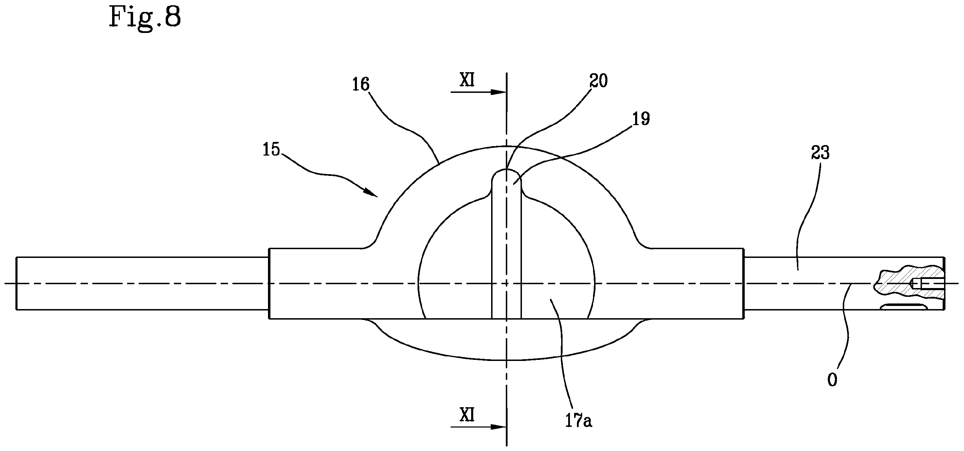

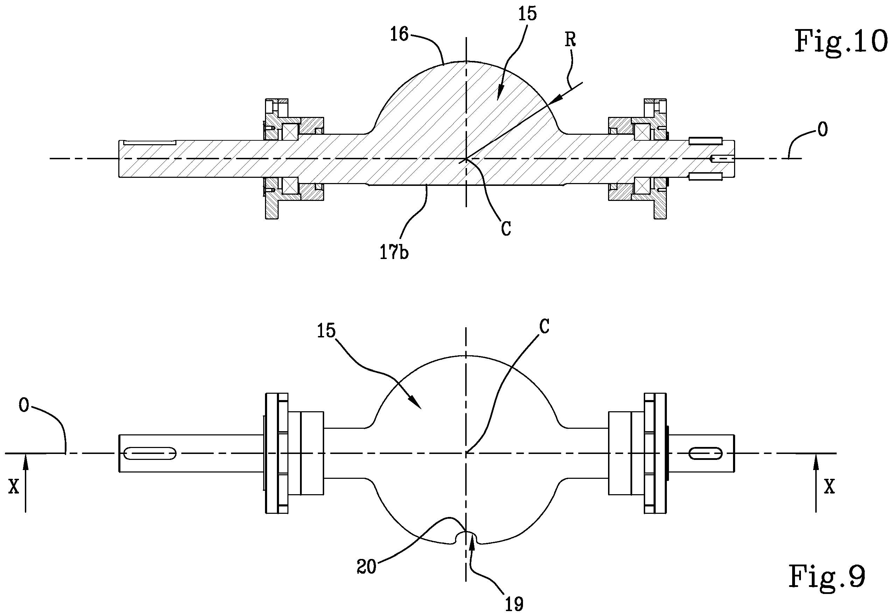

As better illustrated in figures 7-11, the passage surface 17 comprises a first portion 17a preferably implemented by a plane parallel to the shutter axis "0" and arranged at a distance from the shutter axis "O" equal to about ¾ of the radius "R" of the ball. In other words, the first portion 17a defines a first planar surface parallel to the shutter axis "O" and arranged at a distance from the shutter axis "O" equal to about ¾ of the radius "R" of the ball.

The first portion 17a is shaped so as to generate, at least in some angular positions of the shutter body 15 in particular close to the angular closing position, a circular segment configuration of the open surface 11a of the outlet opening 11.

Preferably, a groove 19 is formed centrally in the first portion 17a and develops in a direction perpendicular to the projection of the shutter axis "O" on the first portion itself. The shape and dimensions of the groove 19 are a function of the type of ingredients, in particular the shape and dimensions of at least one ingredient in tablets.

An apex 20 of the groove 19 defines a closing point of the shutter body 15 which, when lying on the plane of the outlet opening 11 or below it, corresponds to the angular closing position of the shutter body (figure 4A). A radius of the shutter body 15 passing through said apex 20 represents a closing radius 21.

The groove 18 represents a possible embodiment of a recess adapted to implement, in at least a position of partial angular opening of the shutter body 15, an effective portion P1 of the open surface 11a which has a width L1 parallel to the shutter axis "O", having a value comparable to that of a length L2, perpendicular to the shutter axis "O".

The open surface 11a of the passage opening 11 also has at least one elongated portion P2 in the direction of the shutter axis "O", in particular two elongated portions P2 if the recess is arranged centrally to the first portion 17a. Figure 16 schematically shows the passage opening 11a in a position of partial angular opening of the shutter body 15, close to closing.

The passage surface 17 comprises a second portion 17b preferably implemented by a plane parallel to the shutter axis "O", arranged at a distance from the shutter axis "O" equal to about ¼ of the radius "R" of the ball and intersecting the first portion 17a. In other words, the second portion 17a defines a second planar surface parallel to the shutter axis "O", arranged at a distance from the shutter axis "O" equal to about ¼ of the radius "R" of the ball and intersecting the first portion 17a.

The passage surface 17 may also comprise a third portion 17c preferably implemented by a plane parallel to the shutter axis "O", arranged at a distance from the shutter axis "O" equal to approximately ¼ of the radius "R" of the ball and intersecting the second portion 17b. In other words, the third portion 17c defines a third planar surface parallel to the shutter axis "O", arranged at a distance from the shutter axis "O" equal to about ¼ of the radius "R" of the ball and intersecting the second portion 17b.

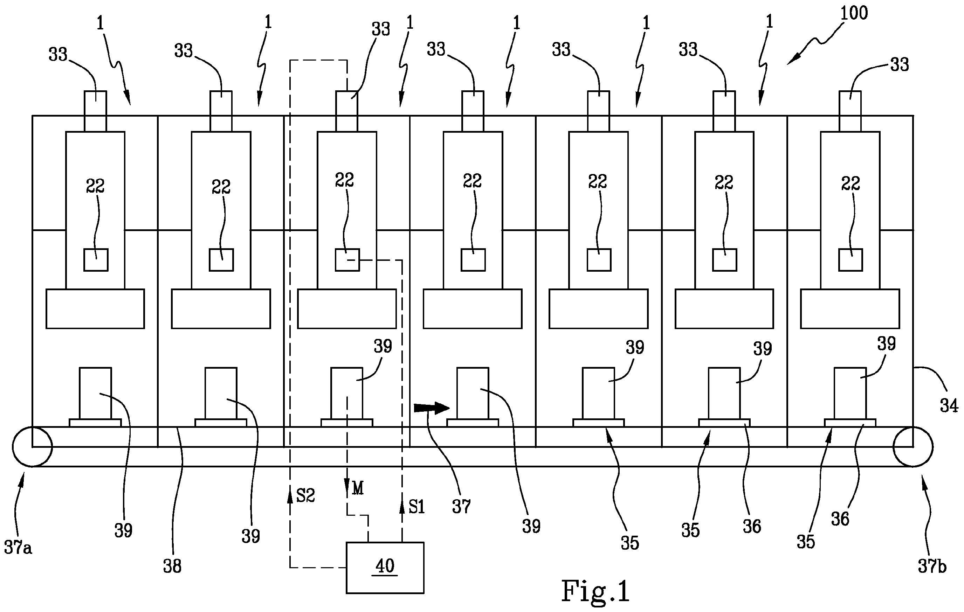

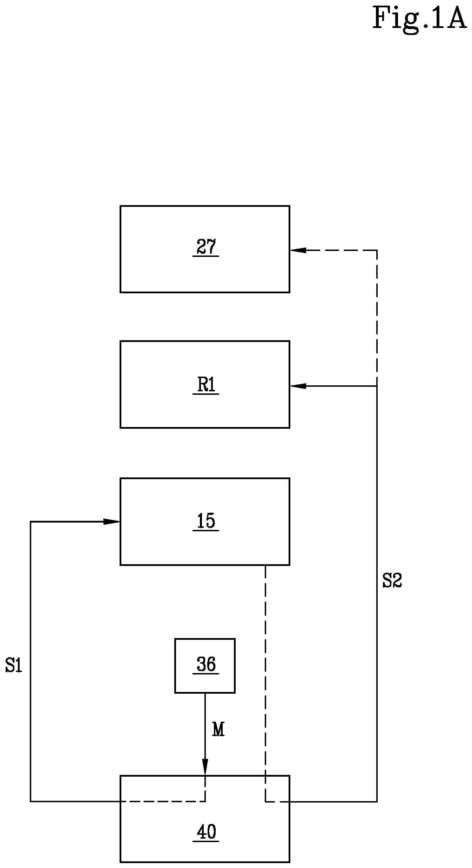

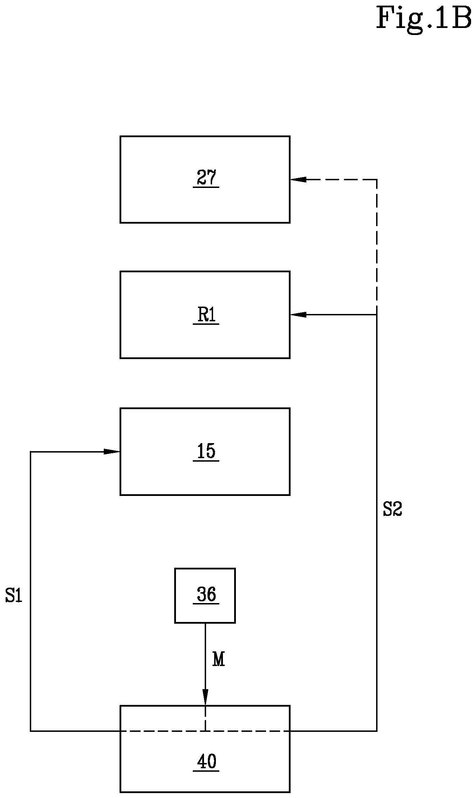

As for example shown in figures 1-3, a first motor member 22, preferably of the reversible type, is operatively connected to the shutter body 15 to cause the rotation thereof about the shutter axis "O" between the angular closing position and a maximum angular opening and vice versa. The first motor member 22 may be implemented by means of an asynchronous or brushless motor, for example directly keyed onto a shutter shaft 23 defining the shutter axis "O" and carrying the shutter body 15. Alternatively, other drives may be provided, for example oleodynamic.

Preferably, the metering apparatus 1 comprises a safety device 24 configured for causing the automatic closing of the outlet opening 11 bringing the shutter body 15 back to an angular closing position in case of faults. For example, an elastic element 25 is operatively active on the shutter member 15 to bring it back to the angular closing position. According to a possible example, the elastic element 25 in the form of a helical spring is interposed between the shutter shaft 23 and a frame of the metering apparatus 1 preferably by means of a lever 26.

The safety device 24 may be associated with position sensors and/or mechanical stops configured and arranged so as to mechanically define the angular the end-of-travel and/or closing position of the shutter body 15.

The metering apparatus 1 comprises a stirrer 27 arranged inside the storage container 2, in particular in the internal volume 3. The stirrer 27 is rotatable about a rotation axis substantially coinciding with the longitudinal axis "A". Such a rotation axis "A" is perpendicular to the outlet opening 11.

The stirrer 27 comprises a central shaft 28 defining the rotation axis "A" and at least one blade 29 which extends radially from the central shaft 28 and comprises a scraping surface R1.

The scraping surface R1 is counter-shaped with respect to the spherical shutter surface 16 and is active on at least a portion thereof following the rotation of the stirrer 27 about the rotation axis "A".

In the illustrated example, four blades 29 are provided which are uniformly distributed around the central shaft 28 and active on the spherical shutter surface 16.

Each blade 29 extends from the central shaft 28, in particular from a lower end thereof, and has an arcuate conformation adapted to superiorly enclose a portion of the spherical shutter surface 16. In other words, each blade 29 follows the profile of the spherical shutter surface 16 in a curved manner along the whole distance between the central shaft 28 and the outlet opening 11. The extension of each blade 29 is such as to cover a section comprised between the central shaft 28 and the scraper ring 13.

In other words, as illustrated for example in figure 13A, the blades 29 have a tilted orientation with respect to a direction radial to the rotation axis "A" to influence the fall of the ingredient away from the outlet opening 11 or towards the outlet opening 11 (depending on the tilting angle and the direction of rotation of the blades 29). Alternatively, as for example illustrated in figure 13B, the blades 29 may be oriented according to a radial plane, partially covering a meridian of the portion of ball which defines the shutter body 15.

The distance between each blade 29, in particular each scraping surface R1, and the spherical shutter surface 16 is given by the compromise between the need for an effective scraping and accompanying effect of the material and the need to obtain the correct movement of the shutter body and of the stirrer. Preferably this distance is less than 5 mm, preferably between 0.2 mm and 0.4 mm.

Supporting spokes 31 for example arranged transversely to the rotation axis "A" may be provided inside the storage container 2 to support the central shaft 28.

The stirrer 27 may further comprise at least one remixing arm 32 which extends radially from the central shaft 28 to a determined distance from the blade 29 along the rotation axis "A". In particular, the remixing arm 32 is arranged in an intermediate position of the central shaft 28, above the blade 29. Two or more remixing arms 32 may be provided, arranged staggered along the rotation axis "A" and/or around the rotation axis "A".

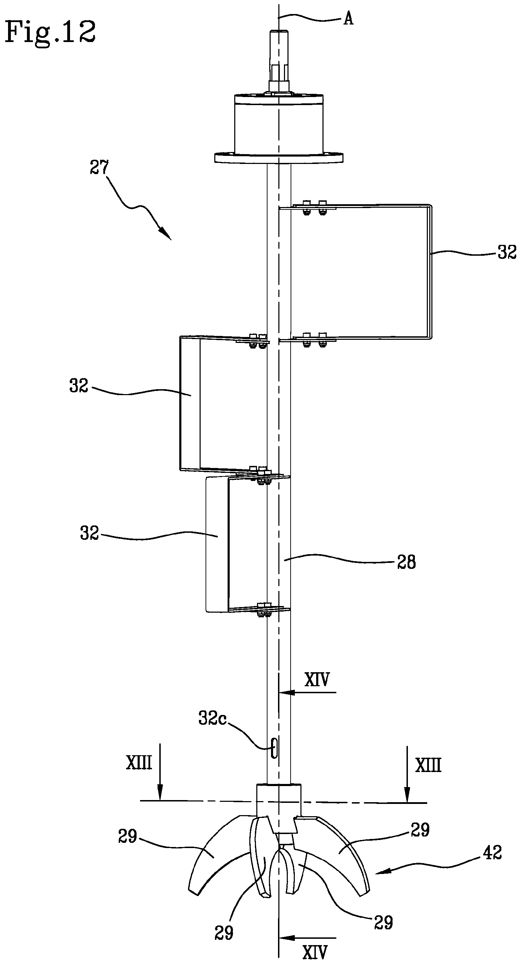

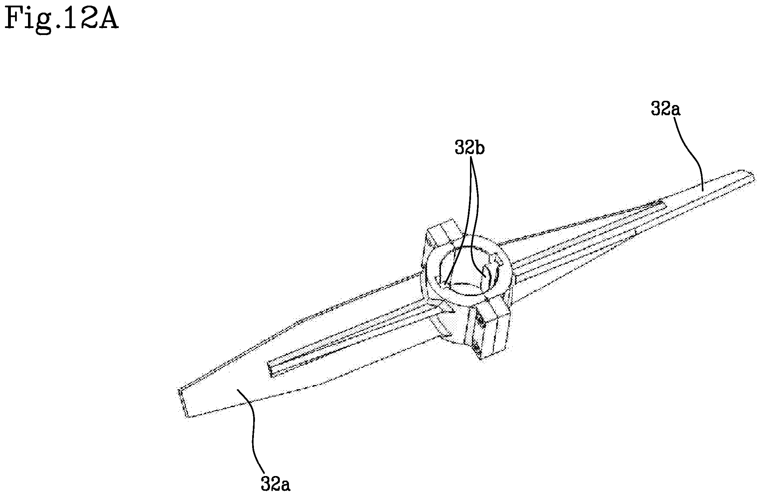

The stirrer 27 may further comprise at least one mixing paddle 32a having a tilted orientation with respect to the rotation axis "A" to influence the fall of the ingredient away from the outlet opening 11 or towards the outlet opening 11 (depending on the tilting angle and the direction of rotation of the mixing paddle). Figure 12A shows two mixing paddles 32a adapted to be connected to the central shaft 28 so as to rotate integral with the blades 29 by means of pins 32b insertable into seats 32c of the central shaft 28.

As shown for example in figures 1-3, a second motor member 33 is operatively connected to the stirrer 27 to cause rotation about the rotation axis "A" of the blade 29 and therefore of the scraping surface R1 on at least a portion of the spherical shutter surface 16. In other words, the second motor member 33 causes scraping of the spherical shutter surface 16 at a scraping speed defined by the rotation speed of the second motor member 33 and of the stirrer 27.

The second motor member 33 may be implemented by an asynchronous or brushless motor, for example directly keyed on the central shaft 28. Alternatively, other drives may be provided, for example oleodynamic. The central shaft 28 passes through the upper section 2a and has an upper end directly keyed to the second motor member 33.

Below the outlet opening 11, the metering apparatus 1 may comprise a suction hood 2c adapted to be arranged in communication with a suction source, not shown.

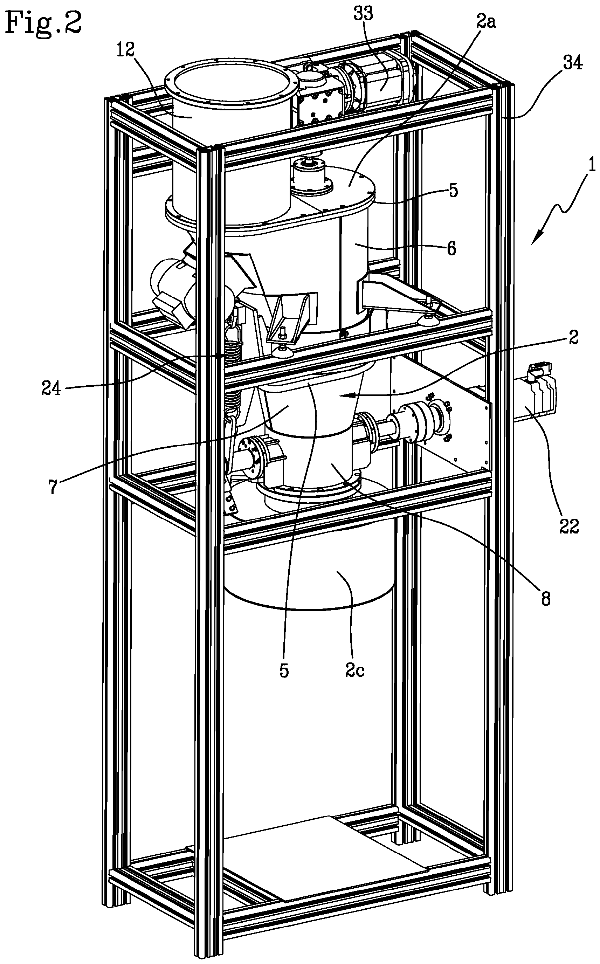

As illustrated for example in figures 1 and 2, the metering apparatus 1 is mounted on a frame 34 made so as to arrange the outlet opening 11 at a given height with respect to a support plane of the frame itself.

Below the outlet opening 11, a collecting station 35 is provided for collecting the ingredient falling from the storage container 2. The collection station 35 comprises a measuring device 36 configured for detecting the amount of ingredient falling from the storage container 2, preferably a weighing device configured for detecting the weight of the ingredient falling from the storage container 2. The measuring device 36 may be implemented by a load cell to measure the weight of the collected ingredient or by means of a volumetric meter to measure the volume of the collected ingredient.

According to a possible embodiment, a metering plant 100 comprises a plurality of metering devices 1, each one dedicated to a specific ingredient. The metering apparatuses 1 are substantially identical and preferably arranged in a line along a single frame 34 so as to arrange each outlet opening 11 at a given height with respect to the abutment plane of the frame and define a collection path 37 which extends between an inlet 37a and an outlet 37b. If necessary, a return path closes the entire path of the metering plant 100 in a ring.

One or more collection stations 35 may be provided which are movable along the collection path 37 by means of a conveyor 38, preferably a conveyor belt. The conveyor 38 is for example configured for intermittent movement of the collection station(s) 35 between one or more metering devices 1.

The collection station 35 comprises a collection container 39 to which a collection bag, not shown, is preferably associated before the inlet 37a to the collection path 37. The collection bag is subsequently taken from the collection container 39 after the outlet 37b of the collection path 37. Alternatively, the collection station 35 may be adapted to receive a collection container 39. Furthermore, the collection station 35 may comprise sensors, not shown, configured for detecting the presence of a collection container 39 in the collection station 35 and/or below the outlet opening 11.

Reference numeral 40 indicates a control unit. Preferably, the control unit 40 is operatively connected to the measuring device 36 and/or to the first motor member 22 and/or to the second motor member 33 (figure 1).

Reference numeral 41 indicates one or more vibrators which may be associated with the storage container 2, outside of it.

By means of the control exercised by the control unit 40, the metering apparatus 1 is able, in use, to implement a method for metering ingredients of compounds, in particular for tyres, according to what is described hereinafter.

An ingredient of compounds, in particular for tyres, is arranged in the storage container 2.

In the presence of a collection container 39, the outlet opening 11 is at least partially opened to allow the passage of the ingredient from the storage container 2 to the collection station 35.

The amount, in particular the weight of the ingredient collected in the collection station 35, is measured by the measuring device 36. Below, reference is made to a weighing device. In particular, the weighing device is configured for generating a measurement signal "M" indicative of the weight of the ingredient collected in the collection station 35. Preferably, the weighing device is configured for generating a measurement signal "M" indicative of the attainment of at least a value of approach M1, M2, ... to a final (weight) quantity. This measurement signal "M" is sent to the control unit 40.

According to the weight of the ingredient collected in the collection station 35, the control unit 40 controls the degree of opening of the outlet opening 11 and the rotation speed of the stirrer 27, i.e. the stirring speed. Moreover, according to the example illustrated in figure 1, in which the scraping surfaces R1 are integrated into the stirrer 27, the control unit 40 also controls the scraping speed, in particular of the spherical shutter surface 16 which coincides with the stirring speed.

The control unit 40 is in fact configured for receiving the measurement signal "M" and, depending on the weight of the ingredient collected in the collection station 35, generating a first control signal S1 and a second control signal S2. In figure 1, the signals "M", S1 and S2 are illustrated with reference to a single metering apparatus 1 for simplicity of illustration.

The first control signal S1 is addressed to the first motor member 22 and is adapted to control the angular position of the shutter body 15 and the degree of opening of the outlet opening 11. Preferably, due to the first control signal S1, the degree of opening of the outlet opening 11 is controlled. Even more preferably, due to the first control signal S1, the degree of opening of the outlet opening 11 is decreased upon approaching the final quantity M0, for example upon reaching a first value of approach M1 to the final quantity M0. Furthermore, the methods for controlling the opening degree of the outlet opening 11 are modified when at least one further value of approach to the final quantity is achieved, for example a second approach value M2 and a third approach value M3.

The second control signal S2 is addressed to the second motor member 33 and is adapted to control the rotation speed of the stirrer 27 and, according to the example just described, also the scraping speed, in particular of the spherical shutter surface 16. Preferably, due to the second control signal S2, the rotation speed of the stirrer 27 is controlled discretely. For example, by means of the second control signal S2, the rotation speed of the stirrer 27 is decreased upon approaching the final quantity M0, for example upon reaching a first value of approach M1 to the final quantity M0. Furthermore, the methods for controlling the rotation speed of the stirrer 27 are modified when at least one further value of approach to the final quantity is achieved, for example the second approach value M2 and the third approach value M3.

In use, the collection containers 39 enter the collection path 37, possibly provided with respective collection bags, and proceed along the collection path until they stop below the outlet opening 11 corresponding to the ingredient to be collected. The control unit 40, appropriately configured, manages the advancement of each collection container 39 according to the ingredients to be collected.

The control unit 40, suitably configured, calculates the maximum angular opening position of the shutter body 15 as a function of the final quantity M0 to be collected in the collection station 35. Such a maximum angular opening position could coincide with the angular end-of-travel position in case of large quantities of ingredient to be collected or it could be smaller than the angular end-of-travel position in case of limited quantities of ingredient to be collected. The control unit 40, appropriately configured, also calculates at least one approach value M1, M2, ... to the final quantity M0.

For example, M0 may be 15 kg (or up to 25 kg). Depending on the type of material (and substantially independently of M0), M1 may be from 1 kg to 6 kg to M0, M2 may be about 500 g to M0 and M3 may be about 100 g to M0.

Thereafter, the control unit 40, suitably configured, generates an opening signal addressed to the first motor member 22 to cause rotation of the shutter body 15 from the angular closing position to the maximum angular opening position, such as for example shown in figure 4B. Optionally, the control unit 40 subordinates the opening signal to the receipt of a signal indicating the presence of a collection container 39, if the relative sensors are present.

With reference to the diagram in figure 15A or 15B, the abscissas show the weight of the collected ingredient, for example expressed in grams [gr]. Preferably, the abscissas show approach values M1-M3 to the final quantity (weight) M0. The ordinates show both the scraping speed (i.e. the rotation speed of the central shaft 28, preferably expressed in Hz) and the rotation angle in which the shutter body 15 is located with respect to the angular closing position expressed in degrees.

In the diagram in figure 15A, the maximum angular opening position corresponds to the null value of the weight. For example, the angular maximum opening position coincides with the angular end-of-travel position corresponding to the angular position in which the closing radius 21 is arranged at an angle δ equal to 120° with respect to the position in which it is in the angular closing position (figure 4B).

With reference to the diagram in figure 15A, the control unit 40 generates the first control signal S1 to progressively close the outlet opening 11 by rotating the shutter body 15 from the maximum angular opening position towards the angular closing position upon achieving the first approach value M1.

For example, the weighing device generates a measurement signal "M" indicating the achievement of a sequence of approach values M1-M3 to which corresponds a first control signal S1 which, for each approach value, modifies the closing speed of the shutter body 15.

When the measurement signal "M" indicates the achievement of a first approach value M1, the first control signal S1 causes the closing of the shutter body 15 until the second approach value M2 is achieved. In this interval, the shutter body 15 reaches a first intermediate angular position.

For example, this first intermediate angular position corresponds to the angular position in which the closing radius 21 is arranged at an angle γ smaller than δ (figure 4C).

In the first intermediate angular position, the third portion 17c defines an outlet chute of the ingredient from the outlet opening 11.

Continuing along the abscissas of the diagram in figure 15A, when the measurement signal "M" indicates the achievement of the second approach value M2, the first control signal S1 modifies the rotation speed of the shutter body 15, for example increasing it until reaching a third approach value M3. In this interval, the shutter body 15 reaches a second intermediate angular position. For example, this second intermediate angular position corresponds to the angular position in which the closing radius 21 is arranged at an angle β smaller than γ (figure 4D). Continuing along the abscissas of the diagram in figure 15A, when the measurement signal "M" indicates the achievement of the third approach value M3, the first control signal S1 modifies the rotation speed of the shutter body 15, for example decreasing it until reaching the final quantity M0. In this interval, the shutter body 15 reaches a third intermediate angular position. For example, this third intermediate angular position corresponds to the angular position in which only the groove 19 faces the outlet opening 11 and the closing radius 21 is arranged at an angle α smaller than β (figure 4E).

Thereafter, the first control signal S1 causes the closing of the shutter body 15 to reach the angular closing position.

According to the alternative illustrated in figure 15B, the first control signal S1 modifies the angular position of the shutter body 15 for each approach value M1-M3.

All intermediate angular positions are angular opening positions in which the outlet opening 11 has an opening surface 11a, i.e. is at least partially open. In particular, the outlet opening 11 is at least partly open on the passage surface 17. Any intermediate angular position, even different from those shown, can be calculated as the maximum angular opening position according to the weight of the ingredient to be collected in the collection station. For example, if M0 corresponds to 1-4 kg, the maximum angular opening position may be close to that shown in figure 4D (angle β).

Similarly, the control unit 40, appropriately configured, calculates a maximum rotation speed V1 of the stirrer 27, i.e. a maximum stirring speed which, in the illustrated example, corresponds to a maximum scraping speed, as a function of the weight of the ingredient to be collected in the collection station. At the same time as the opening signal, the control unit 40, appropriately configured, generates an activation signal addressed to the second motor member 33 to set the rotation of the stirrer 27 to the maximum stirring/scraping speed V1. In other words, the activation signal sets the maximum scraping speed.

With reference to the diagram in figure 15A, the control unit 40 generates the second control signal S2 for modifying, for example, decreasing the stirring/scraping speed starting from the maximum stirring/scraping speed V1 upon reaching the first approach value M1.

At each approach value M1-M3, the second control signal S2 sets a certain rotation speed V2-V3, for example lower.

In particular, when the measurement signal "M" indicates the achievement of the first approach value M1, the second control signal S2 decreases the stirring/scraping speed starting from the maximum stirring/scraping speed V1 and sets a first rotation speed V2 less than the maximum speed V1.

Thereafter, when the measurement signal "M" indicates the achievement of the second approach value M2, the second control signal S2 decreases the first stirring/scraping speed V2 and sets a second stirring/scraping speed V3 lower than the first speed V2.

Thereafter, when the measurement signal "M" indicates the achievement of the third approach value M3, the second control signal S2 decreases the stirring/scraping speed and sets a third stirring/scraping speed V4 lower than the second speed V3.

In the interval in which the rotation speed V4 is set, the shutter body 15 reaches the third intermediate angular position in which only the groove 19 faces the outlet opening 11 and is such as to obtain the correct exit of the last part of the ingredient, in whatever form it is (powders, tablets, ...), in order to obtain the desired degree of accuracy.

In this position or in the neighbourhood of this position, whose open surface 11a is schematically illustrated in figure 16, the control unit 40 can modify the direction of rotation of the stirrer 27, in particular in the case where the blades 29 have a tilted orientation (figure 13A) and/or mixing paddles 32a are present, so as to influence the fall of the ingredient away from the outlet opening or in thrust towards the outlet opening.

Upon reaching the final quantity M0 corresponding to the total weight, the shutter body 15 returns to the closing position and the stirrer 27 is stopped.

In alternative embodiments and operations, a scraper device 42 may be provided having at least one scraping surface R1 rotating about the rotation axis "A", preferably a plurality of scraping surfaces R1 distributed around the rotation axis "A". According to a possible example, at least four scraping surfaces are provided, even more preferably at least six scraping surfaces distributed around the rotation axis.

The scraping surface R1 is configured to scrape a surface of the metering device 1 arranged in the proximity of the outlet opening 11. For example, the scraping surface R1 has a first scraping portion 30 counter-shaped with respect to the spherical shutter surface 16. Such a first scraping portion 30 is movable and active on the spherical shutter surface 16, preferably on at least a portion of a spherical cap defined by the spherical shutter surface 16 when arranged in the angular closing position. In other words, the scraper device 42 is structurally separated from the stirrer 27, as illustrated for example in figure 14B, in which scraping surfaces R1, similar to those made by the blades 29, consist of the lower surface of tabs 30a distributed around the longitudinal axis "A" and rotating around it integrally with a hub 30b. Preferably, a tab has a thickness of about 8 mm.

In figure 14B, four tabs 30a are advantageously provided. Preferably, the number of scraping surfaces is such as to cover a total surface comprised between 5% and 30% (four tabs), preferably 15% and 45% (six tabs) of the spherical shutter surface.

According to the example in figure 14B, the stirring speed and the scraping speed are distinct and can be controlled independently, for example by providing a third motor member, preferably of a reversible type, dedicated to the scraper device 42 and controlled in a manner independent of the second motor member. The second control signal S2 can therefore contain separate control information intended respectively for the scraper device 42 and the stirrer 47 to operate them as described below.

In this case, the control unit 40 controls the degree of opening of the shutter opening 11 by means of the first control signal S1 as a function of the measurement signal "M" while the spherical shutter surface 16 is scraped by moving each scraping surface R1 during the passage of the ingredient from the storage container 2 through the open surface 11a.

The control unit 40 can be operatively connected to the scraper device 42 and configured for generating the second control signal S2, in this case also addressed to the third motor member of the scraper device 42. The second control signal S2 may be adapted to control the scraping speed (rotation) of the scraper device 42 itself according to the degree of opening of the outlet opening 11 (figure 1A) or according to the quantity of ingredient collected in the collection station 35 (figure 1B).

Also in this embodiment, the stirrer 27 may be provided, structurally distinct from the scraper device 42, for example comprising the mixing paddles 32a and/or the remixing arm 32. The control unit 40 can be operatively connected to the stirrer 27 and the second control signal S2, also addressed to the second motor member 33, may be adapted to control the rotation speed of the stirrer 27, i.e. the stirring speed, according to the degree of opening of the outlet opening 11 (figure 1A) or according to the quantity of ingredient collected in the collection station 35 (figure 1B). In other words, in addition to being structurally independent, the scraper device 42 and the stirrer 27 are managed independently of the control unit 40. Also in this case in the neighbourhood of the position shown in figure 4E, whose open surface 11a is schematically illustrated in figure 16, the control unit 40 can modify the direction of rotation of the stirrer 27, in particular in the case where the mixing paddles 32a are present, so as to influence the fall of the ingredient away from the outlet opening or in thrust towards the outlet opening. According to further embodiments, the scraping surface R1 may have more scraping portions, each one dedicated to a part of the apparatus.

The scraping surface R1 and in particular the relevant scraping portions that make it may be made of two or more complementary tabs 30a, 43a, i.e. co-operating with each other to form the scraping surface R1, rotating around the rotation axis "A" integrally with the hub 30b, preferably polygonal, even more preferably hexagonal. Preferably, the two or more complementary tabs are connected to the hub 30b in the same angular position with respect to the rotation axis "A", for example at the same face of the polygonal hub. Alternatively, the complementary tabs 30a, 43a are connected to different hubs and are preferably rotatable around the rotation axis "A" independently of each other.

Alternatively, the scraping surface R1 and in particular the relevant scraping portions that make it may be made of a single tab 43b, that is, a single tab 43b which forms the entire scraping surface R1, rotating around the rotation axis "A" integrally with the hub 30b, preferably polygonal, even more preferably hexagonal.

Preferably, a plurality of scraping surfaces R1 distributed around the rotation axis "A" are provided, for example six scraping surfaces R1, one for each face of the hexagonal hub 30b.

Preferably, the scraping surface R1 has one or more of:
- the first scraping portion 30 counter-shaped with respect to the spherical shutter surface 16 and activatable on at least a portion of the spherical cap defined by the spherical shutter surface 16 when arranged in the angular closing position,
- a second scraping portion 30' counter-shaped with respect to the scraper ring 13 delimiting the outlet opening 11 and activatable thereon;
- a third scraping portion 30" counter-shaped with respect to internal surfaces of the storage container 2 arranged in proximity to the outlet opening 11 and activatable thereon.

Regardless of whether they are referred to as "first", "second" and "third" scraping portions, each scraping portion may be present independently of the others.

Figure 17A illustrates an embodiment comprising tabs 30a structurally similar to those illustrated in figure 14B, i.e. each defining the first scraping portion 30 of the scraping surface R1 counter-shaped with respect to the spherical shutter surface 16 and activatable on at least a portion of the spherical cap defined by the spherical shutter surface 16 when disposed in the angular closing position. In addition to the tabs 30a, tabs 43a are provided, each complementary to a tab 30a in defining the scraping surface R1. The tabs 43a are made to define the second scraping portion 30' and the third scraping portion 30".

Moreover, each tab 43a comprises a connecting arm 44 which projects from the hub 30b. According to a possible embodiment not illustrated, the second scraping portion 30' and the third scraping portion 30", thus the tab 43a, may be omitted.

Figure 17B illustrates an embodiment which differs from that illustrated in figure 17A in that each tab 30a defines the first scraping portion 30 and the second scraping portion 30' while each tab 43a, complementary to a tab 30a in defining the scraping surface R1, defines the third scraping portion 30" and comprises the connecting arm 44 which projects from the hub 30b. According to a possible embodiment not shown, the third scraping portion 30" and therefore the tab 43a may be omitted.

Figure 17C illustrates an embodiment which differs from that illustrated in figure 17A in that each tab 30a defines the first scraping portion 30 while each tab 43a, complementary to a tab 30a in defining the scraping surface R1, defines the third scraping portion 30" and includes the connecting arm 44 which projects from the hub 30b. In this case, therefore, the second scraping portion 30' is not provided.

Figure 17D illustrates an embodiment in which each scraping surface R1 and in particular the relevant scraping portions that compose it are made by the single tab 43b. Possibly the connecting arm 44 may be omitted.

The metering apparatus 1 in the variant described above is able, in use, to implement the method for metering ingredients of compounds, in particular for tyres, described above and further characterised in that it allows scraping a surface of the metering apparatus arranged near the outlet opening 11, and in particular the spherical shutter surface 16 facing the internal volume 3 of the storage container and/or the scraper ring 13 delimiting the outlet opening 11 and/or the internal surfaces of the storage container 2 arranged near the outlet opening itself. Said scraping is obtained during the passage of the ingredient from the storage container 2 to the collection station 35, causing rotation of the scraping surface R1, made according to one of the previously described possible embodiments.

If at least six scraping surfaces R1 are provided, the scraping speed can be kept low, thus providing that the third motor member is operated at a speed of between 5 and 20 rpm. According to a further alternative, the stirrer 27 comprises two structurally and functionally distinct units: a first unit comprises the blades 29 possibly having the respective scraping surfaces R1 and a second unit comprises the mixing paddles 32a. The blades 29 may be radial or differently oriented.

The two units can be controlled independently both as regards the value of the rotation speed and its direction. Also in this case, in fact, in the neighbourhood of the position shown in figure 4E, whose open surface 11a is schematically illustrated in figure 16, the control unit 40 can modify the direction of rotation of the blades 29, particularly if configured to influence the fall of the ingredient away from the outlet opening or in thrust towards the outlet opening. Alternatively or additionally, the control unit 40 can modify the direction of rotation of the mixing paddles 32a.

## Claims

1. Metering apparatus (1) for metering ingredients of compound in particular for tyres preferably operated by gravity, comprising:
a storage container (2) defining an internal volume (3) adapted to receive at least one ingredient of compounds in particular for tyres, wherein said storage container (2) has an inlet opening (10) and an outlet opening (11),
a shutter body (15) housed in said outlet opening (11), rotating around a shutter axis (O) parallel to said outlet opening (11) and
having a shutter surface (16) having a convex profile facing towards said internal volume (3),
**characterized by** comprising a scraper device (42) arranged within said internal volume (3) and having at least one scraping surface (R1) configured and movable to scrape a surface of the metering device (1) arranged in the proximity of the outlet opening (11),
wherein said at least one scraping surface (R1) is counter-shaped with respect to said shutter surface (16).

2. Metering apparatus (1) as claimed in claim 1, wherein said outlet opening (11) has a circular shape and said shutter body (15) has a spherical shutter surface (16).

3. Metering apparatus (1) as claimed in claim 1 or 2, wherein said scraping surface (R1) is rotatable around a rotation axis (A).

4. Metering apparatus (1) as claimed in claim 3, wherein said rotation axis (A) is transverse to said outlet opening (11).

5. Metering apparatus (1) as claimed in one or more of the preceding claims, wherein said at least one scraping surface (R1) has a first scraping portion (30) counter-shaped with respect to said preferably spherical shutter surface (16) and activatable on at least a portion of a preferably spherical cap defined by said preferably spherical shutter surface (16) when arranged in the angular closing position.

6. Metering apparatus (1) as claimed in claim 5, wherein said at least one scraping surface (R1) has a second scraping portion (30') counter-shaped with respect to a scraper ring (13) delimiting the outlet opening (11) and activatable thereon.

7. Metering apparatus (1) as claimed in claim 5 or 6, wherein said at least one scraping surface (R1) has a third scraping portion (30") counter-shaped with respect to internal surfaces of the storage container (2) arranged in the proximity of said outlet opening (11) and activatable thereon.

8. Metering apparatus (1) as claimed in one or more of the preceding claims, wherein said scraper device (42) comprises a single tab (43b) for implementing the entire scraping surface (R1), wherein said single tab (43b) is preferably rotatable around a rotation axis (A) integrally with a hub (30b), preferably polygonal.

9. Metering apparatus (1) as claimed in one or more of claims 1 to 8, wherein said scraper device (42) comprises two or more complementary tabs (30a, 43a) co-operating with each other to implement said scraping surface (Rl), wherein said complementary tabs (30a, 43a) are preferably rotatable around a rotation axis (A) integrally with a hub (30b), preferably polygonal.

10. Metering apparatus (1) as claimed in one or more of the preceding claims, wherein a control unit (40) is operatively connected to the scraper device (42) and is configured to generate a second control signal (S2) addressed to the scraper device (42) and adapted to control a scraping speed of the scraper device itself according to the degree of opening of the outlet opening (11) and/or according to the quantity of ingredient collected in a collection station (35).

11. Metering apparatus as claimed in one or more of the preceding claims, comprising:
a collection station (35) of the ingredient arranged at the outlet opening (11) and comprising a measuring device (36) configured for generating a measurement signal (M) indicative of the quantity of collected ingredient,
a first motor member (22) operatively connected to said shutter body (15) in order to cause the rotation thereof around the shutter axis (O) between an angular closing position in which said shutter surface (16) is arranged to completely close the outlet opening (11) and an angular open position in which said outlet opening (11) is at least partially open at an open surface (11a) ,
a control unit (40) operatively connected at least to the measuring device (36) and to the first motor member (22) and
configured for receiving said at least one measurement signal (M) and for generating, as a function of the quantity of ingredient collected in the collection station (35), a first control signal (S1) directed to the first motor member (22) and adapted for controlling the degree of opening of the outlet opening (11).

12. Method for metering ingredients of compounds, in particular for tyres, comprising:
- arranging an ingredient of compounds, in particular for tyres, in a storage container (2) having an outlet opening (11) leading into a collection station (35) of the ingredient, and houses a shutter body (15) rotating around a shutter axis (O) parallel to said outlet opening (11) and having a shutter surface (16) having convex profile facing towards said internal volume (3),
- at least partially opening said outlet opening (11) in order to allow the passage of the ingredient from the storage container (2) to the collection station (35) through an open surface (11a) of the outlet opening (11), **characterized by**
- during the passage of the ingredient from the storage container (2) to the collection station (35), scraping a surface of the metering apparatus (1) arranged in the proximity of the outlet opening (11) causing the movement of at least one scraping surface (R1), wherein said at least one scraping surface (R1) is counter-shaped with respect to said shutter surface (16).

13. Method for metering ingredients of compounds, in particular for tyres as claimed in claim 12, wherein said scraping surface (R1) has a plurality of scraping portions and wherein at least a scraping portion is placed in motion, preferably in rotation, independently of the remaining scraping portions.

14. Method for metering ingredients of compounds, in particular for tyres as claimed in claim 12 or 13, comprising:
- measuring the quantity of the ingredient collected in the collection station (35),
- controlling the degree of opening of the outlet opening (11) as a function of the quantity of ingredient collected in the collection station (35).

15. Method for metering ingredients of compounds, in particular for tyres as claimed in claim 14, comprising controlling a scraping speed corresponding to the rotation speed of the scraping surface (R1) as a function of the quantity of ingredient collected in the collection station (35) and/or as a function of the degree of opening of the outlet opening (11).

## Patentansprüche

1. Dosiervorrichtung (1) zum Dosieren von Bestandteilen einer Mischung, insbesondere für Reifen, die vorzugsweise durch Schwerkraft betrieben wird, umfassend:
einen Speicherbehälter (2), der ein Innenvolumen (3) definiert, das dazu geeignet ist, zumindest einen Bestandteil von Mischungen, insbesondere für Reifen, aufzunehmen, wobei der Speicherbehälter (2) eine Einlassöffnung (10) und eine Auslassöffnung (11) aufweist,
einen Verschlusskörper (15), der in der Auslassöffnung (11) untergebracht ist und sich um eine Verschlussachse (O) parallel zu der Auslassöffnung (11) dreht und eine Verschlussoberfläche (16) aufweist, die ein zu dem Innenvolumen (3) weisendes konvexes Profil aufweist,
**dadurch gekennzeichnet, dass** sie eine Abstreifeinrichtung (42) umfasst, die innerhalb des Innenvolumens (3) angeordnet ist und zumindest eine Abstreifoberfläche (R1) aufweist, die dazu ausgestaltet und beweglich ist, um eine Oberfläche der Dosiervorrichtung (1), die in der unmittelbaren Nähe der Auslassöffnung (11) angeordnet ist, abzustreifen,
wobei die zumindest eine Abstreifoberfläche (R1) gegengleich in Bezug auf die Verschlussoberfläche (16) geformt ist.

2. Dosiervorrichtung (1) nach Anspruch 1, wobei die Auslassöffnung (11) eine kreisförmige Gestalt aufweist und der Verschlusskörper (15) eine sphärische Verschlussoberfläche (16) aufweist.

3. Dosiervorrichtung (1) nach Anspruch 1 oder 2, wobei die Abstreifoberfläche (R1) um eine Drehachse (A) drehbar ist.

4. Dosiervorrichtung (1) nach Anspruch 3, wobei die Drehachse (A) quer zu der Auslassöffnung (11) verläuft.

5. Dosiervorrichtung (1) nach einem oder mehreren der vorhergehenden Ansprüche, wobei die zumindest eine Abstreifoberfläche (R1) einen ersten Abstreifabschnitt (30), der gegengleich in Bezug auf die vorzugsweise sphärische Verschlussoberfläche (16) geformt und auf zumindest einem Abschnitt einer vorzugsweise sphärischen Kappe, die von der vorzugsweise sphärischen Verschlussoberfläche (16) definiert wird, aktivierbar ist, wenn diese in der geschlossenen Winkelposition angeordnet ist.

6. Dosiervorrichtung (1) nach Anspruch 5, wobei die zumindest eine Abstreifoberfläche (R1) einen zweiten Abstreifabschnitt (30') aufweist, der gegengleich in Bezug auf einen Abstreifring (13), der die Auslassöffnung (11) begrenzt, geformt ist und auf diesem aktivierbar ist.

7. Dosiervorrichtung (1) nach Anspruch 5 oder 6, wobei die zumindest eine Abstreifoberfläche (R1) einen dritten Abstreifabschnitt (30") aufweist, der gegengleich in Bezug auf die inneren Oberflächen des Speicherbehälters (2), die in der unmittelbaren Nähe der Auslassöffnung (11) angeordnet sind, geformt und auf diesen aktivierbar ist.

8. Dosiervorrichtung (1) nach einem oder mehreren der vorhergehenden Ansprüche, wobei die Abstreifeinrichtung (42) eine einzelne Lasche (43b) zur Implementierung der gesamten Abstreifoberfläche (R1) umfasst, wobei die einzelne Lasche (43b) vorzugsweise um eine Drehachse (A) drehbar ist, die in eine vorzugsweise vieleckige Nabe (30b) integriert ist.

9. Dosiervorrichtung (1) nach einem oder mehreren der Ansprüche 1 bis 8, wobei die Abstreifeinrichtung (42) zwei oder mehr komplementäre Laschen (30a, 43a) umfasst, die miteinander zusammenwirken, um die Abstreifoberfläche (R1) zu implementieren, wobei die komplementären Laschen (30a, 43a) vorzugsweise um eine Drehachse (A) drehbar sind, die in eine vorzugsweise vieleckige Nabe (30b) integriert ist.

10. Dosiervorrichtung (1) nach einem oder mehreren der vorhergehenden Ansprüche, wobei eine Steuereinheit (40) mit der Abstreifereinrichtung (42) wirkverbunden und dazu ausgestaltet ist, ein zweites Steuersignal (S2) zu erzeugen, das an die Abstreifereinrichtung (42) gerichtet und dazu geeignet ist, eine Abstreifgeschwindigkeit der Abstreifereinrichtung selbst in Übereinstimmung mit dem Öffnungsgrad der Auslassöffnung (11) und/oder in Übereinstimmung mit der Menge des Bestandteils, der in einer Sammelstation (35) gesammelt wurde, zu steuern.

11. Dosiervorrichtung nach einem oder mehreren der vorhergehenden Ansprüche, umfassend:
eine Sammelstation (35) des Bestandteils, die an der Auslassöffnung (11) angeordnet ist und eine Messeinrichtung (36) umfasst, die dazu ausgestaltet ist, ein Messsignal (M) zu erzeugen, das auf die Menge des gesammelten Bestandteils hinweist,
ein erstes Motorelement (22), das mit dem Verschlusskörper (15) wirkverbunden ist, um die Drehung desselben um die Verschlussachse (O) herum zwischen einer geschlossenen Winkelposition, in welcher die Verschlussoberfläche (16) so angeordnet ist, dass sie die Auslassöffnung (11) vollständig verschließt, und einer offenen Winkelposition, in welcher die Auslassöffnung (11) zumindest zum Teil an einer offenen Oberfläche (118) offen ist, zu veranlassen,
eine Steuereinheit (40), die zumindest mit der Messeinrichtung (36) und dem ersten Motorelement (22) wirkverbunden und dazu ausgestaltet ist, das zumindest eine Messsignal (M) zu empfangen und als eine Funktion der Menge des Bestandteils, die in der Sammelstation (35) gesammelt wurde, ein erstes Steuersignal (S1) zu erzeugen, das an das erste Motorelement (22) gerichtet und dazu geeignet ist, den Öffnungsgrad der Auslassöffnung (11) zu steuern.

12. Verfahren zum Dosieren von Bestandteilen von Mischungen, insbesondere für Reifen, umfassend:
- Anordnen eines Bestandteils von Mischungen, insbesondere für Reifen, in einem Speicherbehälter (2), der eine Auslassöffnung (11) aufweist, die in eine Sammelstation (35) für den Bestandteil führt und einen Verschlusskörper (15) aufnimmt, der sich um eine Verschlussachse (0) parallel zu der Auslassöffnung (11) dreht und eine Verschlussoberfläche (16) aufweist, die ein zu dem Innenvolumen (3) weisendes konvexes Profil aufweist,
- zumindest teilweises Öffnen der Auslassöffnung (11), um den Durchgang des Bestandteils aus dem Speicherbehälter (2) in die Sammelstation (35) durch eine offene Oberfläche (11a) der Auslassöffnung (11) zu erlauben, **dadurch gekennzeichnet, dass**
- während des Durchgangs des Bestandteils von dem Speicherbehälter (2) in die Sammelstation (35) eine Oberfläche der Dosiervorrichtung (1), die in unmittelbarer Nähe der Auslassöffnung (11) angeordnet ist, abgestreift wird, was die Bewegung von zumindest einer Abstreifoberfläche (R1) verursacht, wobei die zumindest eine Abstreifoberfläche (R1) gegengleich in Bezug auf die Verschlussoberfläche (16) geformt ist.

13. Verfahren zum Dosieren von Bestandteilen von Mischungen, insbesondere für Reifen, nach Anspruch 12, wobei die Abstreifoberfläche (R1) eine Vielzahl von Abstreifabschnitten aufweist und wobei zumindest ein Abstreifabschnitt unabhängig von den verbleibenden Abstreifabschnitten in Bewegung, vorzugsweise in Drehung, versetzt wird.

14. Verfahren zum Dosieren von Bestandteilen von Mischungen, insbesondere für Reifen, nach Anspruch 12 oder 13, umfassend:
- Messen der Menge des Bestandteils, die in der Sammelstation (35) gesammelt wurde,
- Steuern des Öffnungsgrads der Auslassöffnung (11) als eine Funktion der Menge des Bestandteils, die in der Sammelstation (35) gesammelt wurde.

15. Verfahren zum Dosieren von Bestandteilen von Mischungen, insbesondere für Reifen, nach Anspruch 14, umfassend das Steuern einer Abstreifgeschwindigkeit entsprechend der Drehgeschwindigkeit der Abstreifoberfläche (R1) als eine Funktion der Menge des Bestandteils, die in der Sammelstation (35) gesammelt wurde, und/oder als eine Funktion des Öffnungsgrads der Auslassöffnung (11).

## Revendications

1. Appareil de dosage (1) pour doser des ingrédients de composé, notamment pour des pneus, fonctionnant de préférence par gravité, comprenant :
un récipient de stockage (2) définissant un volume interne (3) adapté pour recevoir au moins un ingrédient de composés notamment pour des pneus, où ledit récipient de stockage (2) a une ouverture d'entrée (10) et une ouverture de sortie (11),
un corps d'obturateur (15) reçu dans ladite ouverture de sortie (11), tournant autour d'un axe d'obturateur (O) parallèle à ladite ouverture de sortie (11) et ayant une surface d'obturateur (16) ayant un profil convexe tourné vers ledit volume interne (3),
**caractérisé en ce qu'**il comprend un dispositif racleur (42) agencé à l'intérieur dudit volume interne (3) et ayant au moins une surface de raclage (R1) configurée et mobile pour racler une surface du dispositif de dosage (1) agencée à proximité de l'ouverture de sortie (11),
dans lequel ladite au moins une surface de raclage (R1) est en contre-forme par rapport à ladite surface d'obturateur (16).

2. Appareil de dosage (1) tel que revendiqué dans la revendication 1, dans lequel ladite ouverture de sortie (11) a une forme circulaire et ledit corps d'obturateur (15) a une surface d'obturateur sphérique (16).

3. Appareil de dosage (1) tel que revendiqué dans la revendication 1 ou 2, dans lequel ladite surface de raclage (R1) peut tourner autour d'un axe de rotation (A).

4. Appareil de dosage (1) tel que revendiqué dans la revendication 3, dans lequel ledit axe de rotation (A) est transversal à ladite ouverture de sortie (11).

5. Appareil de dosage (1) tel que revendiqué dans une ou plusieurs des revendications précédentes, dans lequel ladite au moins une surface de raclage (R1) a une première partie de raclage (30) en contre-forme par rapport à ladite surface d'obturateur de préférence sphérique (16) et pouvant être activée sur au moins une partie d'une calotte de préférence sphérique définie par ladite surface d'obturateur de préférence sphérique (16) lorsqu'elle est agencée dans la position de fermeture angulaire.

6. Appareil de dosage (1) tel que revendiqué dans la revendication 5, dans lequel ladite au moins une surface de raclage (R1) a une deuxième partie de raclage (30') en contre-forme par rapport à un segment racleur (13) délimitant l'ouverture de sortie (11) et pouvant être activée sur celui-ci.

7. Appareil de dosage (1) tel que revendiqué dans la revendication 5 ou 6, dans lequel ladite au moins une surface de raclage (R1) a une troisième partie de raclage (30'') en contre-forme par rapport aux surfaces internes du récipient de stockage (2) agencées à proximité de ladite ouverture de sortie (11) et pouvant être activée sur celles-ci.

8. Appareil de dosage (1) tel que revendiqué dans une ou plusieurs des revendications précédentes, dans lequel ledit dispositif racleur (42) comprend une patte unique (43b) pour mettre en œuvre toute la surface de raclage (R1), dans lequel ladite patte unique (43b) peut tourner de préférence autour d'un axe de rotation (A) d'un seul tenant avec un moyeu (30b), de préférence polygonal.

9. Appareil de dosage (1) tel que revendiqué dans une ou plusieurs des revendications 1 à 8, dans lequel ledit dispositif racleur (42) comprend deux pattes complémentaires (30a, 43a) ou plus coopérant l'une avec l'autre pour mettre en œuvre ladite surface de raclage (R1), dans lequel lesdites pattes complémentaires (30a, 43a) peuvent tourner de préférence autour d'un axe de rotation (A) d'un seul tenant avec un moyeu (30b), de préférence polygonal.

10. Appareil de dosage (1) tel que revendiqué dans une ou plusieurs des revendications précédentes, dans lequel une unité de commande (40) est reliée de manière fonctionnelle au dispositif racleur (42) et est configurée pour générer un deuxième signal de commande (S2) adressé au dispositif racleur (42) et adapté pour commander une vitesse de raclage du dispositif racleur lui-même selon le degré d'ouverture de l'ouverture de sortie (11) et/ou selon la quantité d'ingrédient collecté dans un poste de collecte (35) .

11. Appareil de dosage tel que revendiqué dans une ou plusieurs des revendications précédentes, comprenant :
un poste de collecte (35) de l'ingrédient agencé au niveau de l'ouverture de sortie (11) et comprenant un dispositif de mesure (36) configuré pour générer un signal de mesure (M) indiquant la quantité d'ingrédient collecté,
un premier élément moteur (22) relié de manière fonctionnelle audit corps d'obturateur (15) afin de provoquer sa rotation autour de l'axe d'obturateur (O) entre une position de fermeture angulaire dans laquelle ladite surface d'obturateur (16) est agencée pour fermer complètement l'ouverture de sortie (11) et une position d'ouverture angulaire dans laquelle ladite ouverture de sortie (11) est au moins partiellement ouverte au niveau d'une surface ouverte (11a),
une unité de commande (40) reliée de manière fonctionnelle au moins au dispositif de mesure (36) et au premier élément moteur (22) et configurée pour recevoir ledit au moins un signal de mesure (M) et pour générer, en fonction de la quantité d'ingrédient collecté dans le poste de collecte (35), un premier signal de commande (S1) dirigé vers le premier élément moteur (22) et adapté pour commander le degré d'ouverture de l'ouverture de sortie (11) .

12. Procédé de dosage d'ingrédients de composés, notamment pour des pneus, comprenant :
- l'agencement d'un ingrédient de composés, notamment pour des pneus, dans un récipient de stockage (2) ayant une ouverture de sortie (11) débouchant dans un poste de collecte (35) de l'ingrédient, et recevant un corps d'obturateur (15) tournant autour d'un axe d'obturateur (O) parallèle à ladite ouverture de sortie (11) et ayant une surface d'obturateur (16) ayant un profil convexe tourné vers ledit volume interne (3),
- l'ouverture au moins partielle de ladite ouverture de sortie (11) afin de permettre le passage de l'ingrédient du récipient de stockage (2) au poste de collecte (35) à travers une surface ouverte (11a) de l'ouverture de sortie (11), **caractérisé par**
- lors du passage de l'ingrédient du récipient de stockage (2) au poste de collecte (35), le raclage d'une surface de l'appareil de dosage (1) agencée à proximité de l'ouverture de sortie (11) provoquant le déplacement d'au moins une surface de raclage (R1), dans lequel ladite au moins une surface de raclage (R1) est en contre-forme par rapport à ladite surface d'obturateur (16).

13. Procédé de dosage d'ingrédients de composés, notamment pour des pneus, tel que revendiqué dans la revendication 12, dans lequel ladite surface de raclage (R1) a une pluralité de parties de raclage et dans lequel au moins une partie de raclage est mise en mouvement, de préférence en rotation, indépendamment des parties de raclage restantes.

14. Procédé de dosage d'ingrédients de composés, notamment pour des pneus, tel que revendiqué dans la revendication 12 ou 13, comprenant :
- la mesure de la quantité de l'ingrédient collecté dans le poste de collecte (35),
- la commande du degré d'ouverture de l'ouverture de sortie (11) en fonction de la quantité d'ingrédient collecté dans le poste de collecte (35).

15. Procédé de dosage d'ingrédients de composés, notamment pour des pneus, tel que revendiqué dans la revendication 14, comprenant la commande d'une vitesse de raclage correspondant à la vitesse de rotation de la surface de raclage (R1) en fonction de la quantité d'ingrédient collecté dans le poste de collecte (35) et/ou en fonction du degré d'ouverture de l'ouverture de sortie (11) .
